# EUROPEAN PATENT APPLICATION

(11) **EP 4 650 976 A1**
(43) Date of publication of application: **19.11.2025**
(21) Application number: 25176278.7
(22) Date of filing: 14.05.2025
(51) Int. Cl.: G06F 15/173

(54) **NETWORK AWARE MEMORY AGENT**

(30) Priority: 14.05.2024 US 202418663454
(71) Applicant: Avago Technologies International Sales Pte. Limited, Singapore 768923 (SG)
(72) Inventor: Tripathi, Devendra, Irvine, 92618 (US); Kalkunte, Mohan, Irvine, 92618 (US)
(74) Representative: Dilg, Haeusler, Schindelmann Patentanwaltsgesellschaft mbH

(57) **Abstract**

Various solutions that provide a network aware memory agent (100). Some such solutions can employ generally hardware-based agent to handle enhanced memory requests, which can include local, shared, and/or distributed memory operations. In an aspect, some solutions can reduce compute load on processors and/or memory latency. Various solutions can be integrated with or separate from a memory controller.

## Description

### Technical Field

This document relates generally to memory controllers and more specifically to network aware memory agents that can manage memory and memory controllers.

### Background

Message Passing Interface (MPI) is a messaging standard that has been used in high-performance computing (HPC) distributed memory systems for many years. MPI offers a set of application programming interfaces (API) that hardware and software manufacturers support for high-performance communications, which can include distributed memory applications. Developers of compute-heavy programs often use these APIs to distribute the compute workload in clusters that use distributed memory systems. The MPI messages from the originating process are handled by a kernel-mode MPI message library that may (in "put" type cases) enrich the MPI message with data from local memory, and then send the enriched message to other process(es), generally via transmission control protocol (TCP) sockets. The receiver side API takes the data embedded in the message and writes the same to its local memory. The receiver API may (in "get" type cases) send back data from its local memory to originating process (again generally with TCP sockets), where the originating API would copy the data to its local memory.

Distributed memory describes an architecture in which multiple nodes (computers, compute cores, etc.) can access memory over a network. Shared memory, by contrast, describes an architecture in which multiple nodes can access the same memory, *e.g.,* through a bus or interconnect. Distributed memory is far more scalable than shared memory, but it imposes the complexity and overhead of networking. Hybrid memory describes an architecture that includes both distributed memory and shared memory. Classically MPI was defined over distributed memory but from MPI-3 onwards, there has been a shared memory (SHMEM) extension where the programmer creates a shared region for various processes run on independent CPUs sharing common memory space. More recently, MPI-4.0 and OpenSHMEM define the framework of hybrid memory. Due to wide availability of well-tested libraries, the dominant use remains that of MPI over distributed memory.

In its current implementation, however, MPI alone is insufficient to support modern HPC needs. Merely by way of example, applications such as machine learning (ML) and artificial intelligence (AI) require higher distributed and shared memory access performance than MPI currently can provide. The MPI message library, including TCP sockets and related software stacks, imposes significant compute load and adds to latency.

There are hardware accelerators that implement most of the networking layers, transport and below, in hardware. There also have been attempts to develop protocols such as Remote Direct Memory Access (RDMA), Remote Direct Memory transfer over Converged Ethernet (RoCE), and MPI tag matching offloads. These protocols can improve underlying data transfer performance but do not integrate with MPI seamlessly and therefore require significant software management. For example, RDMA enables moving data from an application area to packetizing hardware (and vice-versa) but generally require software management, which increases overhead. For instance, in an MPI_Put operation (to send data to distributed memory) software must accept an MPI message, gather the related data, move the data to RDMA's data area, update pointers in the related send queue and then monitor for acknowledgements. Likewise, on the receive side, software must read the receive queue, move the data to actual MPI memory and acknowledge back to hardware. An MPI_Get operation (to request data from distributed memory) requires even more software management.

The involvement of software in managing the networking of distributed memory adds additional overhead, especially considering that much of that software management must be performed by the host operating system in kernel mode, requiring significant mode-switching. This adds overhead that limits the improvements in compute load and latency these protocols are able to provide.

Thus, there is a need for improved hardware solutions that facilitate the networking of distributed memory with reduced software management.

### Brief Description of the Drawings

Figs. 1A-1D are block diagrams illustrating network aware memory agents, in accordance with some embodiments.
Fig. 2 is a block diagram illustrating a system employing multiple network aware memory agents in a shared memory architecture, in accordance with some embodiments.
Fig. 3 is a block diagram illustrating a system employing multiple network aware memory agents in a distributed memory architecture, in accordance with some embodiments.
Fig. 4 is a block diagram illustrating a system employing multiple network aware memory agents in a hybrid memory architecture, in accordance with some embodiments.
Fig. 5A illustrates an interconnect with a ring topology, in accordance with some embodiments.
Fig. 5B illustrates an interconnect with a mesh topology, in accordance with some embodiments.
Figs. 6-8 are message flow diagram illustrating communication models for remote memory operations, in accordance with some embodiments.
Fig. 9 is a flow diagram illustrating a method operating a memory agent, in accordance with some embodiments.
Figs. 10 and 11 are flow diagrams illustrating methods of handling a memory request addressed to a remote memory window, in accordance with some embodiments.
Fig. 12 is a flow diagram illustrating a method of handling a memory request addressed to a local memory window, in accordance with some embodiments.
Fig. 13 illustrates a method of managing a queue of memory requests, in accordance with some embodiments.
Fig. 14 illustrates a method of handling a network compute request, in accordance with some embodiments.
Fig. 15 illustrates a method of managing a fence on a local memory window, in accordance with some embodiments.
Fig. 16 is a block diagram illustrating example components of a computer system in accordance with some embodiments.

### Detailed Description

Some embodiments provide "network-aware memory" (NAM) that can address many of the deficiencies of current solutions. Certain embodiments employ hardware to perform the majority of MPI interaction, significantly reducing compute load and memory latency. In some responses, various embodiments can enable NAM through the use of an agent (referred to herein as a "namAgent" or "NAMA"), which can be implemented with a hardware and/or firmware logic. In some cases, the NAMA can be implemented and/or integrated with a memory controller; such implementations are referred to herein as a "namController" or "NAMC." It should be appreciated that a NAMC is one particular implementation of a NAMA. In an aspect of some embodiments, a NAMA is aware of its location in a distributed memory system and has logic to allow communication with network equipment (*e.g.,* Ethernet components such as a network interface card (NIC), an Ethernet switch, etc.). In some cases, a NAMA can include such a networking component.

In accordance with certain embodiments, the NAMA can perform MPI message handshake, enrich the MPI message with local data (if applicable), handle packetization of the MPI message, and/or exchange packetized messages with existing networking gear. On the receive side, certain embodiments enable the NAMA to receive (*e.g.,* over network sockets), depacketize and/or decode the MPI message, execute some or all memory operations, and/or reply to the originating side if required.

From a global memory view, certain embodiments can provide functionality similar to that of SHMEM for distributed memory system, rather than merely shared memory. Put another way, such embodiments can localize remote memory to the compute processor. In certain aspects, memory localized by some embodiments need not be cache-coherent, because such embodiments can employ the MPI synchronization APIs. Various embodiments can provide additional functionality. For example when a message has reached the network equipment (*e.g.,* switch port or NIC) that talks to a set of memories on a common bus, a NAMA in accordance with certain embodiments can identify the appropriate specific memory controller to receive the message, *e.g.,* using MPI tag matching. Likewise if the existing memory controller has a Compute Express Link^{™} (CXL) interface, a NAMA in accordance with some embodiments could translate the message packet to a CXL message to allow the controller to pick the request message and handle memory read/writes.

In this document, certain terms are used as follows:

**Table 1: Glossary**

| **Term** | **Description** |
|---|---|
| CRM | Completion Response Message. |
| EMR | Enhanced Memory Request. Messages that a NAMA can generate, process, send, and/or receive. In some cases, an EMR can include/embed a MPI message and/or can be packetized for network transport. In some embodiments, a NAMA handles EMRs (along with, in some embodiments, regular memory write and read IO requests). In addition to memory IO requests, EMRs can include other requests, such as network compute requests, fence requests, and the like. Examples of EMRs described further below include without limitation PFR, p2aReq, a2aReq, and a2aCRM messages. |
| Initiator | A process or processor local to a particular NAMA (*e.g.,* an origin NAMA) that initiates a memory request (*e.g.,* an IO request). In an aspect, an initiator can be a processor node that invokes an MPI API in a given distributed memory operation. |
| Interconnect | Logic that handles delivery of reads, writes and other messages among various devices within a compute system. Examples can include, without limitation a front-side CPU bus, UltraPath Interconnect (UPI) by Intel^{™}, Scalable Data Fabric by AMD^{™}, and CoreLink by ARM^{™}. A NAMA can include an interconnect interface, either on-chip or off-chip |
| IO | Memory input-output operations, including without limitation input read operations ("read IO") and write operations ("write IO") performed by a memory controller on a memory. Can be issued (*e.g.,* requested, instructed, etc.) by a node and/or can be incorporated in, embodied by, represented by, etc. various messages, such as a2p, p2a, and a2a messages of various types. Such messages can be referred to as "requests" or "memory requests" for an IO or plurality of IOs, "instructions" to perform an IO or a plurality of IOs, and/or simply using the shorthand "IO" itself. In some cases, an IO request can be encapsulated in or embodied by an EMR when communicated to or from a NAMA. |
| MPI | Message Passing Interface (*e.g.,* MPI 4.0 approved in June 2021) |
| NAMA | Network aware memory agent; also referred to as "agent" or "namAgent". Logic that can generate and/or process messages, including without limitation DMA, RMA, MPI, and packetized MPI messages, interface with a local memory controller to perform memory IO on system memory and/or send messages to instruct memory operations on remote memory. |
| NAMC | Network aware memory controller. A NAMA with an integrated memory controller, a memory controller with integrated NAMA, and/or a NAMA and memory controller packaged together (possibly with additional components) in a single package, *e.g.,* chip, board, system on a chip (SoC) , and/or the like. |
| Network Equipment | Also referred to as "network components." Equipment and/or components that provide communication between a NAMA/NAMC and a network. Examples include a network interface card (NIC), switch, and/or the like. Can be integrated with or separate from a NAMA/NAMC |
| Node | Generally, a compute node running a process, which means one thread of one core of the physical CPU. Within the context of interconnect, any device with an interface to the interconnect, such as a NAMA, a memory controller, a CPU or processing core, and/or a NIC, can be a node. |
| Origin | The source of a memory request. In the context of a NAMA-to-NAMA communication, the origin NAMA transmits an EMR to a target NAMA to perform one or more operations on a memory window managed by the target NAMA. An origin NAMA often is local to an initiator process/processor and generates an EMR in response to a memory request from the initiator. |
| origin_addr | A location in the local memory of the initiator. |
| Peer | Also referred to as a "peer NAMA" or "peer NAMC." From the perspective of a particular NAMA, another NAMA that can serve as an origin or target for memory requests involving that particular NAMA. For example, an origin NAMA and a target NAMA can be considered peer NAMAs for a particular memory transaction. |
| RMA | Remote Memory Access (a standard defining software semantics for one-sided communication with explicit synchronization. Incorporated by MPI. Can include RDMA (remote direct memory access) techniques. |
| SHMEM | Shared Memory Access. Technique for sharing memory across a low-latency medium, such as interconnect, using techniques such as RMA, RDMA, and the like. Example implementations include OpenSHMEM. |
| SMB | Shared Memory Bridge. When the "origin" and "target" are on different memory controllers but in shared memory space, one or more NAMAs can act as a SMB across two memory controllers; for example, in some embodiments, an origin NAMA can send the message to a target NAMA through interconnect and need not use a packet network for that purpose. |
| System Memory | Also referred to as "local memory." Memory that is connected with, shared by, local to, and/or otherwise associated with a particular node or nodes. In the context of a NAMA, memory that is managed by that particular NAMA and/or a memory controller integrated or incorporated with, or otherwise associated with that particular NAMA. Such memory can include, without limitation, any variety of dynamic random-access memory ("DRAM") and/or other memory used to store data and/or instructions for the node(s). System memory can be used by remote nodes via distributed memory operations as described further herein. |
| Target | The location at which a request is fulfilled or performed. In a NAMA-to-NAMA communication, the target NAMA manages the memory window containing the memory that is the subject of the memory request. |
| target_addr | A location in the memory window of destination process or node. |
| Win Group | Also referred to as "communicator group." A group of entities (which can include local processes and/or peer NAMAs) that access the same window or "win" |
| Window | Also referred to as a "Memory Window" or "win." A window or region of memory that an entity (a process or remote NAMA) shares with other entities, from the perspective of the NAMA that manages that window. Specified as a parameters in MPI messages, in which "win" is a handle, which is an example of a memory window identifier. There are MPI functions to get the related address. In certain embodiments, when a window is created (*e.g.,* using MPI_Win_create), the win handle to window-address mapping is in all NAMA that share the window. |
| Window Address | Also referred as a "Win_addr." A physical address of a memory location within a memory window. Used to calculate actual memory read/write location. Can correspond to target_addr in an MPI message. |
| Window Handle | Also referred to as a "Win_handle," "win handle," "window handle." A handle for a memory window. In some embodiments, corresponds to a "win" parameter in the MPI message and is used to match the target memory zone. A win handle is an example of a "memory window identifier" or "window identifier." |

For purposes of illustration, the description below employs a number of exemplary message types and primitive functions. For ease of reference, these exemplary message types are listed and described in Table 2, and the description of each exemplary message type includes some exemplary fields that might be found in messages of such type. Table 3 lists and describes two exemplary fields in more detail. The exemplary primitive functions are listed and described in Table 4, and a few exemplary variables of those exemplary primitives are described in Table 5. It should be noted that neither the message types nor the primitive functions (nor any of the fields or variables described in connection therewith) are intended to be limiting, and a skilled artisan will understand that various embodiments can use a variety of message types, fields, and primitive functions, including without limitation those described herein.

**Table 2: Message Types**

| **Message Type** | **Description and Exemplary fields** |
|---|---|
| p2aReq | Process to Agent Request. In an aspect, these can be MPI messages with addition of message Subtype identifier (*e.g.,* as described further in Table 3 below) and some optional wrappers. These messages are also referred to as p2aMsg (process to agent message). P2aReq for MPI_put() would look like the following (excluding any wrapper): |
| | {int mpiMsgType, // e.g., mpiMsgType = 1 for MPI_Put(), 2 for MPI_Get(), etc. |
| | void* origin_addr, |
| | int origin_count, |
| | MPI_Datatype origin_datatype, |
| | int target_rank, |
| | MPI_Aint target_disp, |
| | int target_count, |
| | MPI_Datatype target_datatype, MPI_Win win} |
| | Even fence messages (like MPI_Win_fence()) are also termed as p2aReq. |
| PFR | Partially Fulfilled Request. When EMR (typically a2aReq) is partly processed (for example when pointer provided for memory-read is used to read the data and that data is embedded back in the message), it is referred to as Partially Fulfilled Request. This message becomes a2aReq after the agentID and msgID fields are added. |
| | For example PFR generated by namAgent for MPI_put() would look like the following (excluding any wrapper): |
| | {int mpiMsgType, //Added MsgType identifier (see msgSubtype earlier) |
| | int origin_count, |
| | MPI_Datatype origin_datatype, |
| | int target_rank, |
| | MPI_Aint target_disp, |
| | int target_count, |
| | MPI_Datatype target_datatype, MPI_Win win, |
| | MPI_Datatype origin_data [origin_count]} |
| a2aReq | Agent to Agent Request. A memory request (*e.g.,* EMR) sent from one NAMA to another NAMA. For example, when the target memory is on a different namAgent (whether in shared memory space or distributed memory space), the local namAgent can add additional fields to p2aReq for the benefit of peer namAgent. At the minimum, such a field would tell the peer namAgent that the request is coming from a namAgent (as opposed to process). This enhanced message is termed as a2aReq. A namAgent may also add additional fields (like packet headers, such as UDP/IP headers) to make the packet routable. Such routing related fields maybe additional to what is considered as a2aReq. As an example, MPI_Put() message when sent from another namAgent may look like following: |
| | {int mpiMsgType, |
| | (agentID) agentIDSrc, |
| | (agentID) agentlDDst, |
| | (msgID) MsgID, |
| | void* origin_addr, |
| | int origin_count, |
| | MPI_Datatype origin_datatype, |
| | int target_rank, |
| | MPI_Aint target_disp, |
| | int target_count, |
| | MPI_Datatype target_datatype, MPI_Win win} |
| a2pCRM | Completion Response Message from NamAgent to local processor (also referred simply as "CRM" when context allows). When a certain MPI message (non-fence type) has been processed by local namAgent, the agent indicates the completion (or error, if there was error in the processing) to the MPI message initiator. Typically, there would be a ring in the local memory for such messages. The namAgent would write the message and increment its pointer for future message. This way, the process can have multiple MPI messages outstanding without being blocked. The process could also configure the namAgent to report such a CRM via interrupt messaging in which case no such ring needs be configured. 64b of data should suffice for CRM message and it may contain completion (short of Valid bit), error (say 8b error code) and any additional related info (say "win" handle). |
| | a2pCRM message is also defined for fence type MPI messages. In case of a2pCRM for fence MPI message, one may not need a ring of response messages but just a one location per "win" where completion response is written. The reason is that after fence message, a process is likely going to wait for completion instead of sending additional MPI messages. |
| | Typically, processes use fence (e.g. MP_Win_fence) messages for synchronization and in this case, a2pCRM would be enabled for fence messages only. |
| | Here is the suggested structure for the same. |
| | {int mpiMsgType, |
| | (agentID) agentIDSrc, |
| | (agentID) 0, |
| | (msgID) 0, |
| | int target_rank, |
| | short int Error Code, |
| | MPI_Datatype target_datatype, MPI_Win win} |
| a2aCRM | When a remote namAgent completes the request (e.g. MPI_put) sent to it by peer, it sends completion response message to the originating namAgent indicating that MPI message was fully processed (successfully or with error). This message is called a2aCRM. Though a2aCRM, when sent by a remote namAgent located on a different network node, may have additional fields compared when it comes from namAgent located on same network node, such additional fields are not considered as part of a2aCRM. |
| | Here is the suggested structure for the same: |
| | {int mpiMsgType, |
| | (agentID) agentIDSrc, |
| | (agentID) agentlDDst, |
| | (msgID) agentMsgID, |
| | int target_rank, |
| | short int Error Code, |
| | MPI_Datatype target_datatype, MPI_Win win |

**Table 3: Exemplary Fields**

| **Field** | **Description** |
|---|---|
| mpiMsgType | When a process invokes a MPI message, the name of the message (like "MPI_Put") acts as message identifier. The compiler changes the name into internal identifier (and there is function table that is looked up using that identifier to get the pointer to actual loaded function-binary). When the process talks to namAgent, the called code (a simple user space code) has to add an equivalent identifier in a new field of MPI message and write that message to well defined address (aka p2MsgAddr) in local memory. mpiMsgType is that field. It is suggested to assign an "int" (using C language terminology) for this but with the understanding that "short int" portion (i.e. lower 16b) would be enough for the message identifier. The upper 16b area would be used by namAgent to store additional message types for agent to agent and agent to process communication. mpiMsgType= {(short int) 0, short int mpiMsgldentifier} // From process |
| | mpiMsgType= {short int msgSubtype, short int mpiMsgIdentifier}//From Agent |
| msgSubtype | As mentioned above, msgSubtype is a short int (16 bit) size field that fits into upper 16b part of mpiMsgType coming from process (where it is guaranteed to be 0). Here are few values suggested: |
| | 0 => Process generated MPI message (p2aReq) 1=> Partially Filled Request (see PFR later) 2=> Source -Target Swapped Version 3=> Partially Filled and source-target swapped 4 to 0xFFFD => Reserved 0xFFF0 => Completion Response message without error OxFFF1=> Completion Response message with error (err code could be sent as part of CRM message) 0xFFF2 to 0xFFFE => Reserved 0xFFFF => Not valid |

**Table 4: Exemplary Primitive Functions**

| **Function** | **Description and Exemplary Variables** |
|---|---|
| AddressOf() | Sometimes, the MPI parameters are just handles (like in case of "win"). AddressOf function simply gets the actual address from that handle. Address could be typecasted in the unit of data being written or read. If there is no such context, then, address is defined in unit of bytes. |
| opOf(op) | MPI defines may operations of the data before it is written. Usually parameter "op" (===operation) is just a handle. opOf() gets actual operation. A list of some of such operations is given below. |
| | MPI_MAX |
| | MPI_MIN |
| | MPI_SUM |
| | MPI_PROD |
| | MPI_MAXLOC |
| | MPI_MINLOC |
| | MPI_BAND |
| | MPI_BOR |
| | MPI_BXOR |
| | MPI_LAND |
| | MPI_LOR |
| | MPI_LXOR |
| | MPI_REPLACE |
| | MPI_NO_OP |
| | (Please refer to MPI specification to get details of these operations) |
| doOP(op0, op1, op) | This function performs the operation as defined by parameter "op" over two operands op0 and op1. The "op" is of type MPI_op and it is a handle of the actual operation. In other words, opOf() function is expected to be built-in here. The op0 and op1 are operands. |
| sizeOf() | This function return the size of data in bytes. |
| write(wdata, waddr, dtype) | This function simply causes the wdata to be written to "waddr". The unit of data is defined by dtype. The write operation must honor Endianness. It is suggested (but not required) that namAgent data format be little endian but it is required that endianness of the data in all namAgents be same. It is possible that read data unit is not same as write data unit and hardware is supposed to address that. Thus if read data was in unit of 2B and 8 such data was read (for a total of 16B), it is possible to write such a data at 4 locations each of which has unit of 4B. The hardware must handle the related endianness conversion. |
| read(raddr, dtype) | This function simply reads data from "raddr". The unit of data is defined by dtype. The read operation must honor Endianness. It is suggested (but not required) that namAgent data be little endian but it is required that endianness of the data in all namAgents be the same. It is possible that read data unit is not same as write data unit and hardware is supposed to address that. Thus if read data was in unit of 2B and 8 such data was read (for a total of 16B), it is possible to write such a data at 4 locations each in unit of 4B. The hardware must handle all related endianness conversions. |
| split(data, dtype) | Split an array of words into new array of words of dtype. The function is supposed to know the data type of existing array. It is possible that size of existing data type is different than size of new data type (dtype). Thus, an array of 16 words, each of size 2B could be split into 8 words each of size 4B. The hardware must handle the related endianness conversion |

**Table 5: Exemplary Variables**

| **Variable** | **Description** |
|---|---|
| agentID | This is suggested to be a short integer (16b) and it simply identifies the namAgent. All a2aReq and a2aCRM messages carry agentID of sender (source) and target (destination). This is part of namAgent configuration. |
| msgID | This is a short int (16b) variable that the source namAgent assigns to a2aReq and the same continues with a2aCRM message too. The messages that flow from one namAgent to other are "self-contained" so msgID is not a must but having this ID provides robustness. Having a short Int msgID may also help with group matching (which otherwise requires checking of "win" handle that is full size integer). |
| p2aMsgAddr | This is the starting address at which an initiator process sends MPI message that can be intercepted by namAgent for MPI message processing. The sender could view nameAgent as a FIFO into which the complete message(s) gets written. In this case, the FIFO would be seen has having width of largest MPI message size. The namAgent has many other configuration variables (including some defined below) that have their own addresses within the memory map provided for namAgent as a device. It is good to treat p2aMsgAddr as the first configuration variable. It is expected (though not required) that interconnect would send whole MPI message as a single burst of data. The MPI message FIFO is expected to have storage for more than one message so the message throughput is not impacted due to less storage. |
| a2aMsgAddr | This is the address at which a peer namAgent would try to write a2aReq to target nameAgent (if it was same network node) OR this is the address at which nearby network equipment would write (over the interconnect) a message that it received from remote namAgent. |
| | It is suggested to keep a2aMsgAddr same as p2aMsgAddr and let namAgent figure out source of message using msgSubtype. |
| enableA2pCRM, enableA2aCRM | enableA2pCRM: This flag enables generation of a2pCRM (non-fence types), |
| enableFenceCRM | enableA2aCRM: This flag enables the generation of a2aCRM message. |
| | enableFenceCRM: This flag enables the generation of completion response to fence MPI messages. |
| | Typically enableFenceCRM and enableA2aCRM would be set to TRUE and enableA2pCRM would be set to FALSE. But it is possible to do a2p CRM so that process need not send the fence message to namAgent at all. In that case the fence API would simply check if all messages for a given "win" are acknowledged and return locally. |
| | It is possible to have enableA2pCRM on message type basis (for example there could be two flags one that are for "put" type and other for "get" type messages. |
| ucMPICount | Uncompleted MPI message Count. The namAgent maintains a variable called ucMPICount on per "win" handle basis. When a local process sends MPI message for a specific window "win", to local namAgent, the namAgent increments such a count (for that win). When the message execution completes (as seen by the local namAgent), the same count is reduced. When MPI_Win_fence(win) message comes to namAgent from local process, it would issue "CRM" for such a message if the related ucMPICount is 0. If the count were non-zero, the namAgent would set a flag ucMPIFenceFlag and, later, when the count becomes 0, the "CRM" for the pending fence message would be generated. Though this "CRM" message generation is mandatory, it is still advised to keep it (generation of CRM for a MPI_Win_fence) as configurable via enableFenceCRM flag. Note that CRM message generation can be via memory or interrupt. |
| | (It is advisable to maintain another counter ucMPICount_t (on per "win" basis). Such a counter would increment when the namAgent would get an a2aReq from the peer node and decrease the same when the request has been processed and response has been sent to the source agent. One can use the regular ucMPICount as well, but having a separate counter makes debugging easy). |
| ucMPIFenceFlag | The namAgent maintains a variable called ucMPIFenceFlag on per "win" basis. This is a Boolean and it is set when namAgent receives a fence (e.g. MPI_Win_fence) message on that window. The flag is cleared after the namAgent checks for related ucMPICount, finds it to be 0, and sends (if enabled) the CRM message for that MPI fence message. If CRM for the fence is not enabled, the flag would be cleared once ucMPICount is found to be 0 for that "win" but the CRM would not be generated. |

### Examples of NAMA Functionality in Various Embodiments

A NAMA in accordance with different embodiments can exhibit a number of novel functionalities and attributes by nature of its network awareness. In some embodiments, a NAMA maintains list of memory zones (or memory windows) along with their location in the network (including location in the physically connected memory). In some embodiments, memory zone is defined by a pair *e.g.,* {win_handle, win_addr}, and a NAMA can be configured a create a using a function (*e.g.,* a MPI_Win_create) function with this mapping.

### 1) Regular Memory Requests

In some embodiments a NAMA snoops on regular memory read/write requests as well as enhanced memory request (EMR) coming from local processes or from peer memory agents (*e.g.,* NAMAs). In some embodiments, the NAMA is disposed in path of all messages to the memory controller (and/or, as described in further detail below, can comprise and/or be integrated with a memory controller). In such embodiments, the NAMA might forward regular memory read/write requests to memory controller and forward the read data / write completions back to the originating process/processor (*e.g.,* via interconnect).

In some embodiments, the NAMA then, can ignore (or forwards unaltered, if inline) the regular memory read/write requests to the local memory and let the request be processed by the memory controller (and/or process such requests with an integrated memory controller, such as in the case of a NAMC), returning unaltered the response (including any read data) of the memory controller, *e.g.,* via the interconnect.

### 2) Enhanced Memory Requests

In some embodiments, an enhanced memory request (EMR) might be one of the following: (a) a message (*e.g.,* p2aReq) originating from local processes or (b) a message (*e.g.,* a2aReq, a2aCRM) originating from a remote processor, *e.g.,* via a remote NAMA over the network. See the definition section earlier. In some embodiments, an EMR might include data read from a memory, in which case the message can be considered a Partially Fulfilled request (PFR). A PFR request message might be transmitted from NAMA to NAMA as an a2aReq message (or a portion thereof). In an aspect, an a2a (agent-to-agent) message can include parameters including an agentID of source NAMA and a destination NAMA in addition to the PFR message. In some cases, as specified in further detail below, the a2a message might also include addressing and/or routing information (*e.g.,* IP headers) to enable routing over a packet network.

### a) Enhanced Memory Requests from a Local CPU

If the message is an EMR from a local CPU (which implies that origin memory window must be located in the locally attached system memory) and the target memory zone to which the request is directed also local (*i.e.,* is a memory window managed by the NAMA), the NAMA translates the enhanced request into a set of regular memory read/write requests and forwards to the local memory controller (and/or executes the requests with an integrated memory controller if a NAMC). In some embodiments, the NAMC will also Increment a ucMPICount variable for the specified memory window. This might be done, for example, for fault tolerance, *.e.g.,* so if for some reason the operation does not complete, a following MPI_Win_fence operation gets held as well. If the request is a "put" request, the NAMA might read the specified amount of data from the "origin" location specified in the EMR and write the same to "target" location specified in the EMR. Conversely, if the request is a "get" request, the NAMA might read the specified amount of data from the "target" location and write it to the "origin" location. In either case, if completion response messages (CRM) are enabled, the agent might send an a2pCRM message back to calling process. · Such a message could be an interrupt, a write to specific memory area configured by process for such purpose, etc. Typically, such a specific memory area is organized as a ring so that process has liberty to read such a2pCRM messages at leisure. After performing the requested memory operation(s), the NAMA might decrement the ucMPICount for the specified memory window (*e.g*., if the counter was incremented at the start of the message processing. If ucMPICount becomes 0 and the ucMPIFenceFlag for that target memory window is set, the NAMA might generate and/or send a CRM for that fence and/or clear the corresponding ucMPIFenceFlag.

One the other hand, if the message is an EMR originating from a local CPU and the target memory zone is controlled by another memory controller (*e.g.,* on the same network node), the NAMA can act as an origin NAMA in a shared memory bridge (SMB). For example, in some embodiments, the NAMA can update the request (and/or generate a new request) in such a way that the request can be routed by local interconnect to a target NAMA that manages the target memory window and send the message back to local interconnect as an a2a message. The origin NAMA might also increment a ucMPICount for the specified memory window. If the request is a "put" request, the NAMA might read the specified amount of data from the "origin" location, and enrich the EMR with the read data, and change the request into PFR. The origin NAMA could generate an a2aReq including the PFR and send that request to the target NAMA. If the request is a "get" request, the origin NAMA might swap the origin and target fields, update the msgSubtype, and/or send the EMR request to the target NAMA. · In some embodiments, such a modified message can be treated as "put" by the target NAMA.

If the request is from local CPU and it directed to a memory window that is not local and it is not on same network node either, the NAMA might act as an origin NAMA and generate a request to be fulfilled by a target NAMA over a network, such as a packet network. The origin NAMA may fetch local data (*e.g.,* if the request is a "put" request) and form PFR. The original NAMA might embed the PFR into a2aReq message. In some embodiments, the origin NAMA packetizes the message into a packet (or a plurality of packets, if necessary) that includes the a2aReq message as well as header(s) that make the packet routable by locally connected network equipment. The origin NAMA might then send the packet(s) to the network equipment either directly or through the interconnect. In some cases, the origin NAMA also increments ucMPICount for the target memory window. Based on typical MPI message structure, a message often can fit into a single Ethernet packet; if not, the origin NAMA could generate multiple packets, which would be reassembled by the target NAMA. The generation and re-assembly of multiple packets might be performed by the origin and target NAMAs, respectively, using any of a variety of such techniques, or it might be performed by intermediary network equipment. Other than the functions necessary for transport by the packet network, the origin and target NAMA can operate similarly to the SMB behavior described above.

### b) Enhanced Memory Requests from Peer Agents

If, however, the request is from peer NAMA on same network node, the peer NAMA might act as the origin NAMA, and the local NAMA might act as the target NAMA of a SMB. From the perspective of the local (target) NAMA, if the requests an a2aReq message with a "put" request (*e.g.,* a PFR), the target NAMA would write the data to local memory and send a2aCRM message back to origin NAMA.

If the request is a a2aReq with a "get" request but converted into PFR (as described above) by the origin NAMA, the target NAMA might write the data to local memory, and/or decrement the "win" specific ucMPICount, if any. If the count becomes 0 and ucFenceFlag is set for that "win", the target NAMA (if enabled, *e.g.,* via an enableA2pFenceCRM flag) might generate an a2pCRM message for a past fence message (that caused setting of the ucFenceFlag originally), and/or clear the ucFenceFlag. If the request is a "get" request with swapped fields, the target agent might read the data from local memory, change the request to PFR, and/or send the message (with the read data) to the origin NAMA as an a2aReq message.

In any case, whether a "put" or "get" request, the target NAMA might increment the ucMPICount for the target memory window before the operation begins and decrement the same when the operation is done. Even though the target agent might complete the work in local memory in non-blocking fashion, the use of the counter can be beneficial for fault tolerance. In some cases, *e.g.,* for the sake of clarity, the target NAMA might implement different counters (say ucMPICount_t) to differentiate a count of a2a memory requests from a similar count of requests from a local process.

If the request is from a peer NAMA on a different network node, the local NAMA acts as a target NAMA, performs any functions necessary to depacketize or otherwise recover the a2aReq message, and otherwise operate similarly to the SMB behavior described above. In this case, however, the target NAMA is aware of the network node for the origin NAMA and can function to packetize and transmit a response message to network equipment (*e.g.,* directly or through interconnect) for transmission over the packet network. This can include sending a2aCRM message, if applicable.

If the message received from a peer NAMA is an a2aCRM message received from a peer NAMA at remote network node (*e.g.,* transported via packet network) or a local node (*e.g.,* transported via interconnect) the local NAMA might decrement the ucMPICount and create a2pCRM message (if enabled, *e.g.,* with an enableA2pCRM flag) to the originating process. If ucMPICount becomes 0 and the flag ucFenceFlag for that window is set, the NAMA might generate an a2pCRM for the fence message (if enabled) and/or clear ucFenceFlag for the target window.

### c) Fence Messages

In some embodiments, if the EMR is a fence message (*e.g.,* MPI_Win_fence), the NAMA can infer that the fence message originates from a local process. In that case, the NAMA might set a flag (*e.g.,* ucMPIFenceFlag) for the memory window to which the fence message is directed. If the counter (*e.g.,* ucMPICount) for that memory window is zero, the NAMA might send a CRM message to the local process (if enabled) and/or clear the flag. If the counter is non-zero, the NAMA might allow the flag to remain set until the counter reaches zero as a result of execution of other request; and that time, the NAMA might send a CRM message (if enabled).

### Exemplary Architecture and Topology

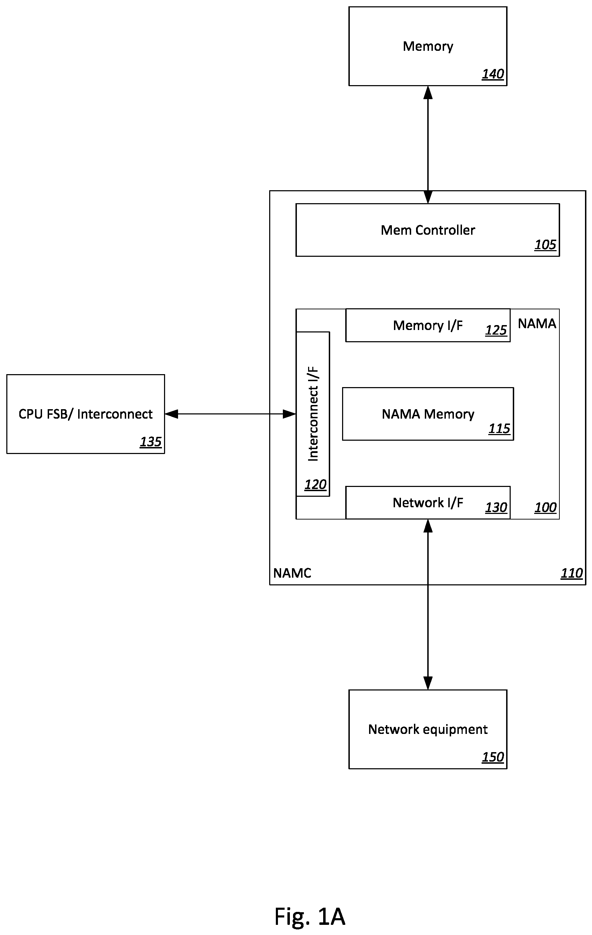

Fig. 1A illustrates an exemplary NAMA 100, in accordance with one set of embodiments. In the illustrated embodiments, the NAMA 100 happens to be integrated with a memory controller 105 in a NAMC 110 The NAMC 110 comprises a memory controller 105 and a NAMA 100 integrated within a single package (*e.g*., chip, system on a chip (SoC), printed circuit board (PCB), etc. The NAMA 100 comprises NAMA context memory 115 which can be used to buffer MPI messages, data, etc. during memory operations (including without limitation distributed memory operations). In embodiments illustrated by Fig. 1A, the NAMC 110 further comprises an interconnect interface 120, a memory interface 125, and a network interface 130. These interfaces beneficially allow the NAMC 110 to communicate with interconnect 135, system memory 140, and network equipment 150. In various embodiments, the nature of these interfaces can depend on the type of connections made; merely by way of example, in some cases, a memory interface 125 might be configured to interface with a memory controller 105 in a similar fashion that a CPU might interface with a memory controller 105. In other embodiments, as described below, for example the memory interface might be incorporated within a memory controller 105 and/or might serve some or all of the functions of a memory controller; in such cases, the memory interface 125 might interface directly with the memory 140, e.g., using commands similar to those used by a memory controller. In some embodiments, one or more of the interfaces 120-130 might be similar to typical interfaces used on chip packages or PCBs to interface with the components (*e.g.,* interconnect 135, system memory 140, and/or network equipment 150).

In certain embodiments, these interfaces 120-130 enable a NAMA 100 (including without limitation a NAMC 110) to communicate via the interconnect (*e.g.,* with MPI messages), memory (*e.g.,* via read/write input-output operations (IO) performed on the system memory 140 by the memory controller 105, controlled by instructions provided to the controller 105 by the NAMA 100 through the memory interface 125 in particular embodiments), and/or other NAMAs (*e.g.,* via packetized EMR messages transmitted over the network components 150 via the network interface 130). In some embodiments, the network interface 130 can incorporate network equipment 150, *e.g.,* a NIC or switch, as well. In some embodiments, the network interface 130 and/or network equipment 150 can provide communication with a packet network, *e.g.,* an Internet Protocol (IP) network. As used herein, the term "network," includes, but is not limited to, such a packet network, unless the context clearly indicates otherwise.

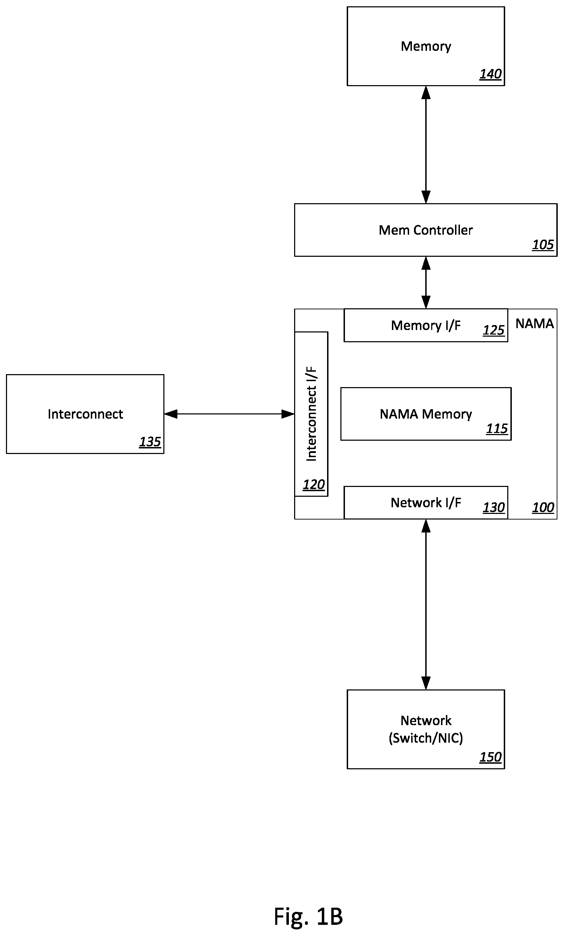

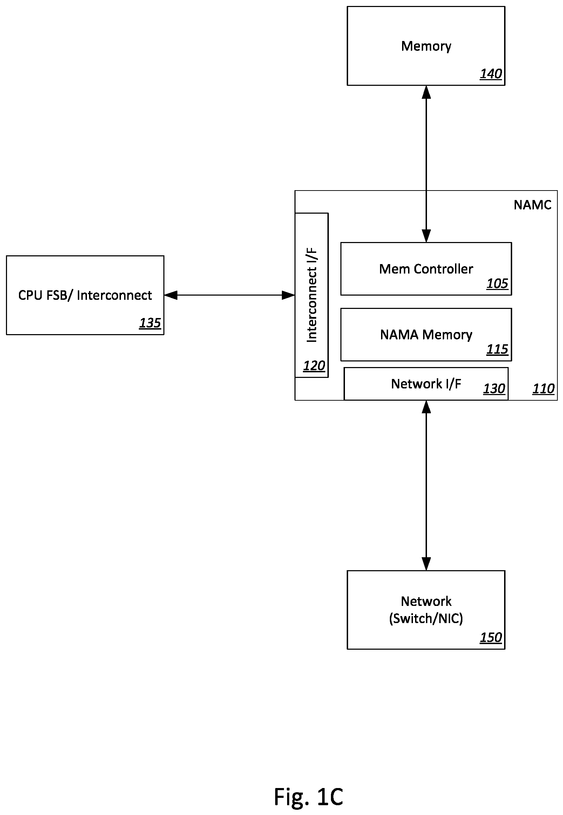

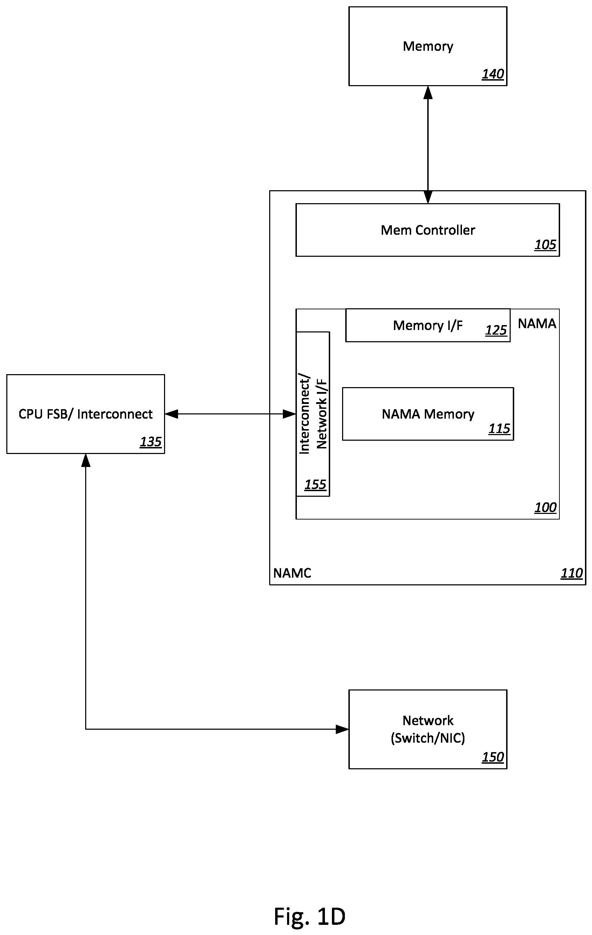

While Fig. 1A illustrates one possible arrangement of a NAMA 100, other embodiments can feature many different arrangements. A few examples of such arrangements are illustrated by Figs. 1B-1D. For instance, in Fig. 1B, the NAMA 100 is not incorporated or integrated with a memory controller, but instead is in communication (via the memory interface 125) with an external memory controller 105. In contrast, the NAMC 110 of Fig. 1C incorporates NAMA 100 functionality within a memory controller 105 itself, while Fig. 1D interfaces with the network components 150 through the interconnect 135, rather than directly, and employs a combined interconnect/network interface 155. From these examples, a person skilled in the art will appreciate that many different architectural arrangements are possible within the various embodiments, and that all such arrangements are capable of some or all of the NAMA 100 functionality described herein. Thus, no particular exemplary architecture should be considered limiting. For ease of description, many of the following examples describe a NAM-C 110 including an integrated NAMA 100 and memory controller 105; it should be appreciated, however, that similar principles and techniques can apply to a NAMA 100 without an integrated memory controller 105, and that a NAMA 100 and NAM-C 110 can be used interchangeably in such examples, in which case an external memory controller 105 can be used where necessary.

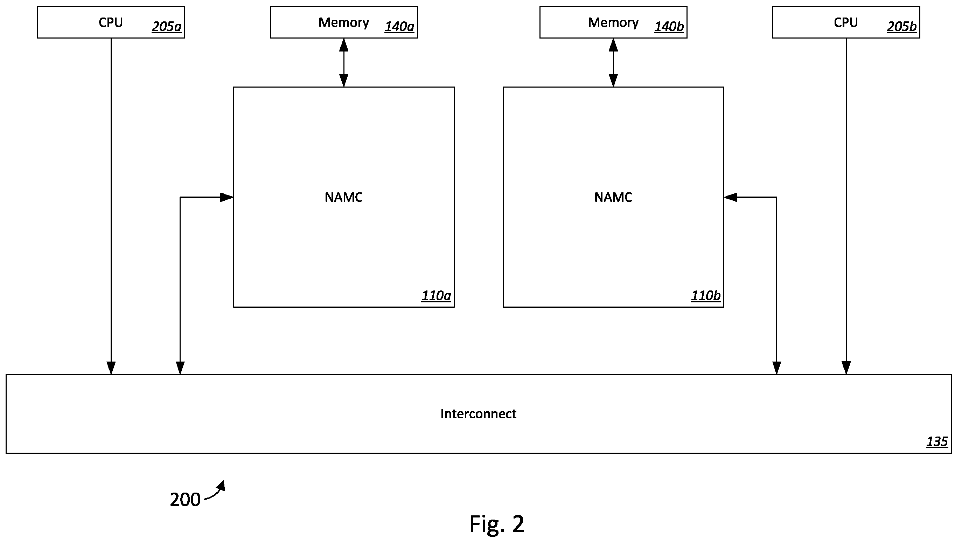

Fig. 2 illustrates a system 200 including a plurality of NAMAs 100a, 100b in communication with an interconnect 135. In the embodiments illustrated by Fig. 2, the NAMAs 100a, 100b happen to be NAMCs, which each include an integrated memory controller, but various embodiments could equally employ a NAMA without an integrated memory controller, perhaps in communication with an external memory controller, *e.g.,* as illustrated by Fig. 1B. This system 200 is an example of a shared memory architecture using the NAMC 110a, 100b. The first NAMC 110a is in communication with a first system memory 140a, while the second NAMC 110b is in communication with a second system memory 140b.

in some embodiments, the NAMCs 110 can communicate over the interconnect 135, enabling a hybrid memory arrangement in which, *e.g.,* CPU 205a can access and use memory 140b by issuing memory IO requests to NAM-C 110a, which can communicate those memory IO requests, *e.g.,* via the interconnect 135 to NAMC 110b, *e.g.,* using techniques described herein, and NAMC 110b can perform the requested memory IO on memory 140b. Likewise, CPU 205b can issue memory IO requests to memory 140a through NAMC 110b, which can communicate those requests to NAMC 110a, which can perform the requested IO on memory 140a. In some embodiments, because each of the NAMCs is a "network aware memory controller," or more precisely, a memory controller 105 integrated with a NAMA 100, those devices can handle all inter-NAMC communication and memory operations, regardless of location, allowing the CPUs 205 to be ignorant of the location of the memory 140 in which the requested IOs are performed. From the perspective of a CPU (*e.g.,* CPU 205a), it need only make a conventional memory IO request to what appears to be its local memory controller (NAMC 110a), which handles all the complexity of the hybrid memory arrangement.

In some embodiments, the interconnect 135 can be a shared interconnect, which provides communication between CPU 205a, NAM-C 110a, CPU 205b, and NAMC 110b. In other cases (not illustrated), the interconnect 135 might be split, with one interconnect 135 providing communication between a CPU 205 (*e.g.,* CPU 205a) and its local NAMC 110 (e.g., NAMC 110a), and another interconnect providing communication between another CPU 205 (*e.g.,* CPU 205b) and its local NAM-C 110 (*e.g.,* NAMC 110b). The two NAMCs 110 might be in communication via a third interconnect 135 and/or via one of the other two interconnects. As described in detail elsewhere herein, NAMC 110 can communicate, in some embodiments, using EMRs (which can embed or incorporate MPI messages or other memory requests), which can be carried over the interconnect 135. In particular, a NAMC 110 can communicate with a CPU using MPI or conventional memory IO instructions, and it can communicate with another NAMC 110 using EMR or any other appropriate communication protocol. In a sense, the NAMC 110 can serve as an interface between a local CPU and another NAMC.

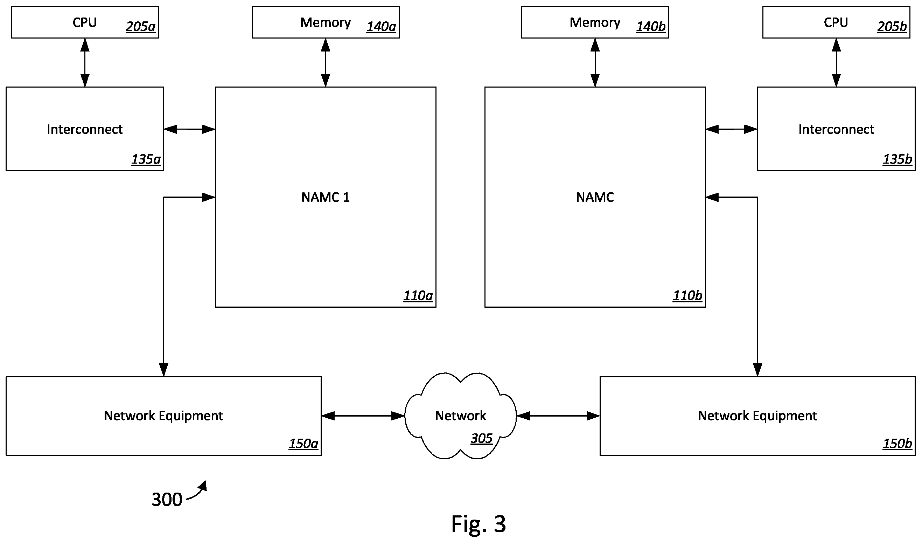

In some embodiments, the NAMCs 110 can communicate over a variety of different media. Fig. 2 provides one example, communicating over an interconnect 135. Fig. 3 provides another example, illustrating a system 300 in which two NAMCs 110 communicate (*e.g.,* through network equipment 305) over a network 310. In an aspect, Fig. 3 can be considered a distributed memory arrangement. In particular embodiments, the network 310 can be a packet network, such as an Internet protocol (IP) network, which can run across various media, such as Ethernet, Fibre Channel, and/or the like. In some embodiments, a NAMC 110 can produce and/or packetize MPI communications and/or transmit/receive such communications over the network 310, *e.g.,* by reference to Figs. 1A-1D, through a network interface 130 and/or a combined interface 155, via network equipment 150. Other than the nature of the transport (*e.g.,* network 300 vs. interconnect 135) and/or any necessary packaging (*e.g.,* packetizing messages for transport over the network), the operations between NAMCs 100 can proceed similarly in Figs. 2 and 3.

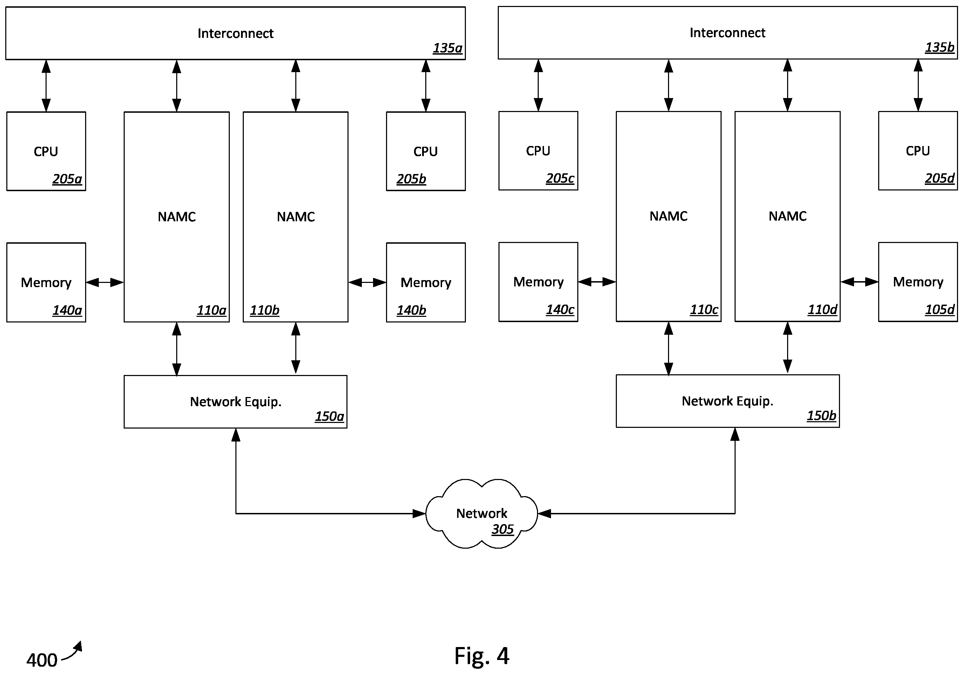

In other embodiments, the NAMCs 110 might provide a hybrid memory arrangement, with a number NAMCs 110 communicating via one or more interconnects 135 and/or one or more networks 305. Merely by way of example, Fig. 4 illustrates a system 400 employing a hybrid memory arrangement, in which a plurality of CPUs 205 (*e.g.,* 205a, 205b) have a shared memory arrangement, similar to that described above with respect to Fig. 2, in which, *e.g.,* CPU 205a can access memory 140b local to CPU 205b by issuing a memory IO request to NAMC 110a, which can communicate the request to NAMC 110b, for example as described with regard to Fig. 2 and elsewhere herein. Moreover, the system 400 provides distributed memory functionality, *e.g.,* similar to that described above in the context of Fig. 3. Merely by way of example, a CPU 205, *e.g.,* CPU 205a, can access memory 140, *e.g.,* memory 140c, 140d, across a network 305 by issuing a memory IO request to NAMC 110a, which can communicate with NAMC 110c and/or NAMC 110d as appropriate, to service that IO request from memory 140c and/or 140d, *e.g.,* as described above with respect to Fig. 3 and elsewhere herein.

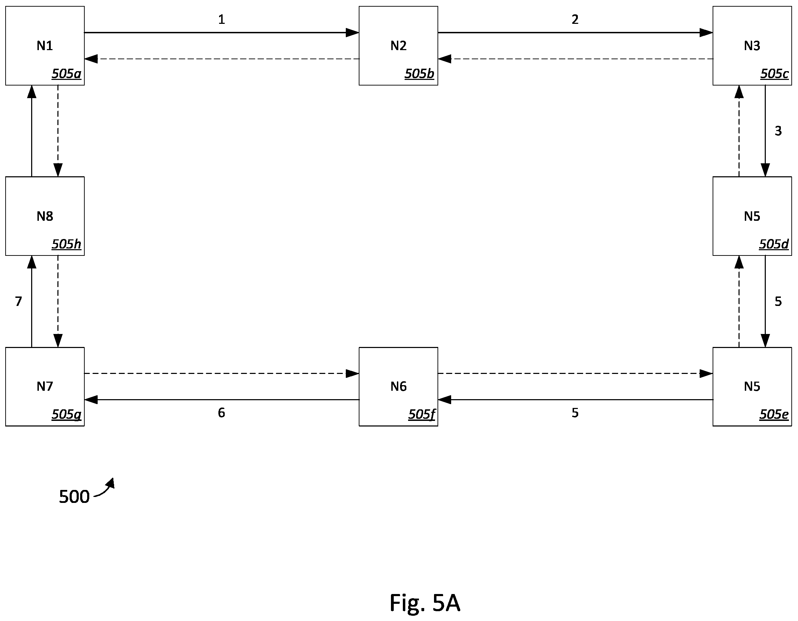

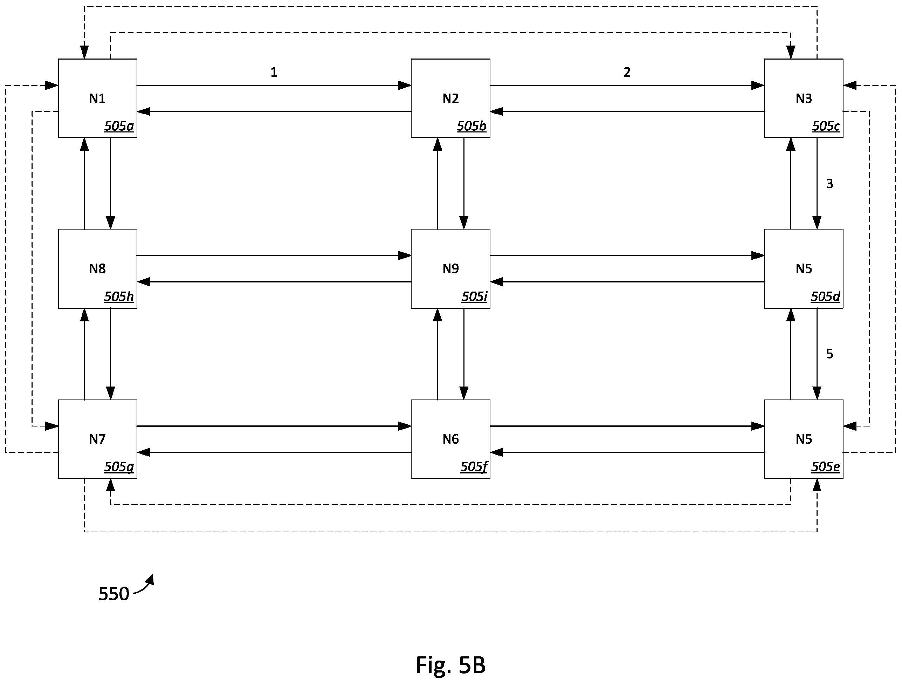

Although the interconnect 135 of Figs. 2 and 4 is illustrated as a bus, it should be appreciated that the topology of the interconnect 135 can vary. Merely by way of example, in some embodiments, an example of which is illustrated by Fig. 5A, the interconnect 135 might employ a ring topology 500, in which all nodes 505 (*i.e.,* the entities that use the interconnect to send and receive data from other entities connected to the same interconnect, *e.g.,* CPUs 205 and/or NAMC 110), are connected in sequential fashion. The ring can be unidirectional (as shown by the solid links between nodes 405) or bidirectional (as shown collectively by the solid and dashed links between the nodes 505). In a unidirectional ring, one node can send data directly to only one other node (left or right). In double way case, a node can send data directly to two other nodes (one to its left and one to its right). A ring topology, *e.g.,* 500, provides good traffic control but relatively high latency. In a unidirectional ring, with M nodes, maximum latency would be M-1 hops and average latency would be M/2 hops. In a bidirectional ring, the maximum latency would be ^{~}M/2 hops and average latency would be ^{~}M/4 hops. Conversely, in a mesh topology, *e.g.,* the topology 550 illustrated by Fig. 5B, traffic control is more complex than, *e.g.,* in a ring topology, but latency is relatively lower. Thus in 4-way mesh topology (as illustrated by the solid links between nodes 505 on Fig. 5B), the maximum latency would about ^{~} M/4 hops and average latency would be ^{~}M/8 hops. An "all-way" mesh (*e.g.,* as illustrated collectively by the solid and dashed links between nodes 505 on Fig. 5B) would connect every node to all others, providing a maximum latency of 1 hop, but that may be impractical for significant interconnect size.

It should be appreciated that the architecture and topologies illustrated by Figs. 1A-1D, 2-4, and 5A-5B are exemplary in nature and should not be considered limiting in any way. Merely by way of example, while Fig. 4 illustrates NAMC 110a and NAMC 110b each having a direct connection with network equipment 150, in some embodiments, each NAMC 110 might have a connection with separate network equipment, and/or such connections might be indirect, *e.g.,* via the interconnect 135. Similarly, as noted above, while Figs. 2-4 illustrate NAMCs 110 for simplicity, other embodiments just as easily could employ one or more NAMAs 100 (perhaps with external memory controllers 105 as appropriate). Moreover, from perspective of an individual NAMA 100 or NAMC 110 in accordance with some embodiments, the nature of the remote memory controllers and/or agents with which it communicates, *e.g.,* to issue or fulfill shared and/or distributed memory requests, can vary with different implementations, so long as such remote memory controllers and/or agents are capable of participating in the communications described elsewhere herein, and in particular, in the following description. More generally, in accordance with some embodiments, the architecture of the devices and systems implementing the communication techniques and memory operations described herein is not material, so long as those devices and/or systems are capable of performing the communication techniques and/or memory operations described herein. Likewise, in accordance with other embodiments, a NAMA 100 or NAMC 110 as described architecturally herein can employ communication techniques and/or memory operations different than those described herein without varying from the scope of those embodiments.

### Exemplary Messages and Communication Models

Table 6 (below) provides an exemplary, non-exhaustive list of some messages, and some exemplary, non-exhaustive fields defined for those messages, that can be exchanged by NAMCs 110 in accordance with some embodiments. Table 6 is not intended to provide an exhaustive or limiting list of messages, but instead to provide an overview of possible data structures that a NAMA 100 in accordance with various embodiments might be capable of processing and to illustrate examples of various implementation-specific details to enable a skilled artisan to understand certain principles of a set of embodiments.

**Table 6: Exemplary MPI Messages**

| **Unidirectional (One-Sided) Communications (defined by MPI RMA Extension)** | | |
|---|---|---|
| **MPI Message** | **Fields/Parameters** | **Notes** |
| MPI_Get | void* origin_addr, | Unidirectional communication message to read data from the window of target process into initiator's origin buffer. |
| | int origin_count, | |
| | MPI_Datatype | |
| | origin_datatype, | target_disp is offset from the registered "window" address |
| | int target_rank, | |
| | MPI_Aint target_disp, | There is no ordering requirement |
| | int target_count, | (origin implies initiator of read) |
| | MPI_Datatype | |
| | target_datatype, | ----Algo for Memory Access Parameters---- |
| | MPI_Win win | WAddr= origin_addr |
| | | RAddr= AddressOf(win)+target_disp) |
| | | --Algo of Operation--- |
| | | origin_datatype int_odata[origin_count]; |
| | | target_datatype int_tdata[target_count]; |
| | | -------At target NAMA---- |
| | | for (int i=0; i< target_count; i++) { int_tdata[i]= read(Raddr+i* sizeOf(target_datatype), target_datatype); } |
| | | ---At origin NAMA--- |
| | | Int_odata= split(int_tdata, origin_datatype); |
| | | for (int i=0; i< origin_count; i++) { write(int_odata[i], Waddr+ i*sizeOf(origin_datatype), origin_datatype); } |
| | | NOTE: "win" is a handle; certain embodiments provide a mapping of the handle to a physical address in the target memory space. The mapping is configured in the NAMA. |
| MPI_Put | void* origin_addr, | Unidirectional message to write data into the window of target process from initiator's origin buffer. |
| | int origin_count, | |
| | MPI_Datatype | |
| | origin_datatype, | target_disp is offset from the registered |
| | int target_rank, | "window" address. |
| | MPI_Aint target_disp, | ("origin" implies initiator of write) |
| | int target_count, | ----Algo for Memory Access Parameters---- |
| | MPI_Datatype | RAddr= origin_addr |
| | target_datatype, | WAddr= AddressOf(win)+target_disp |
| | MPI_Win win | |
| | | --Algo of Operation--- |
| | | origin_datatype int_odata[origin_count]; |
| | | target_datatype int_tdata[target_count]; |
| | | -------At origin NAMA---- |
| | | for (int i=0; i< origin_count; i++) { int_odata[i]= read(Raddr+i* sizeOf(origin_datatype), origin_datatype); } |
| | | ---At Target NAMA--- |
| | | Int_tdata= split(int_odata, target_datatype); |
| | | for (int i=0; i< target_count; i++) { write(int_tdata[i], (Waddr+ i*sizeOf(target_datatype)), target_datatype); } |
| | | NOTE: "win" is a handle, and some embodiments provide a mapping of the handle to physical address in the target memory space. The mapping is configured in namAgent. |
| MPI_Accumulate | void* origin_addr, | MPI_op is the handle to the "op" |
| | int origin_count, | |
| | MPI_Datatype origin_datatype, | ----Algo for Memory Access Parameters---- |
| | | RAddr= origin_addr |
| | int target_rank, | WAddr= AddressOf(win)+target_disp |
| | MPI_Aint target_disp, | |
| | int target_count, | --Algo of Operation--- |
| | MPI_Datatype target_datatype, | origin_datatype int_odata[origin_count]; |
| | | target_datatype int_tdata[target_count]; |
| | MPI_op op, | |
| | MPI_Win win | -------At origin NAMA---- |
| | | for (int i=0; i< origin_count; i++) { int_odata[i]= read(Raddr+i* sizeOf(origin_datatype), origin_datatype); } |
| | | ---At Target NAMA--- |
| | | target_datatype temp_var; |
| | | Int_tdata= split(int_odata, target_datatype); |
| | | for (int i=0; i< target_count; i++) { |
| | | temp_var= doOP(int_tdata[i], read(Waddr+i*sizeOf(target_datatype), target_datatype), op); |
| | | write(temp_var, (Waddr+ |
| | | i*sizeOf(target_datatype)), |
| | | target_datatype); } |
| MPI_Get_accumulate | void* origin_addr, | Similar to MPI_Accumulate with difference that the target location (before accumulation was done), is read and read data sent back to origin node (like in case of MPI_Get()) and the NAMA at the origin node writes that read data at result_addr (count being result_count), which is in same memory space as the "origin_addr". |
| | int origin_count, | |
| | MPI_Datatype origin_datatype, | |
| | void* result_addr, | |
| | int result_count, | |
| | MPI_Datatype result_datatype, | |
| | int target_rank, | |
| | MPI_Aint target_disp, | |
| | int target_count, | |
| | MPI_Datatype target_datatype, | |
| | MPI_op op, | |
| | MPI_Win win | |
| MPI_Fetch_and_op | void* origin_addr, | Subset of MPI_Get_accumulate where count is 1 (and accordingly there is only one data type and there is no need of split). |
| | void* result_addr, | |
| | MPI_Datatype datatype, | |
| | int target_rank, | |
| | MPI_Aint target_disp, | |
| | MPI_op op | |
| | MPI_Win win | |
| MPI_Win_fence | Int assert, | This is the collective synchronization that starts and ends an epoch on a window when accessed at origin or exposed at target. It is used for active target communication where all "win members" issue this. All MPI messages that target a given "win" need complete before MPI_Win_fence issued by local process completes. In other words, the ucMPICount from local process need become 0 and only then "CRM" for such a fence message issued. |
| | MPI_Win win | |

| **Bi-directional (Handshake) Communications** | | |
|---|---|---|
| **MPI Message** | **Fields/Parameters** | **Notes** |
| MPI_send | void * data, | This is a unicast message. |
| | int count, | Message Envelope is defined by tag, communicator (which is a unsigned integer handle) and destination (which comes to rank). |
| | MPI_Datatype datatype, | |
| | int destination, | |
| | int tag, | |
| | MPI_com communicator | The completion of message requires MPI_recv call on the destination process. |
| MPI_recv | void * data, | This is also a unicast message. |
| | int count, | Here the source is rank in the communicator group. |
| | MPI_Datatype datatype, | |
| | int source, | The completion of message requires MPI_send call on the source process. |
| | int tag, | |
| | MPI_com communicator, | |
| | MPI_status status | |

In some embodiments, the MPI_send and MPI_recv EMR messages are the simplest messages, and in practice, often the most commonly used messages. These messages can be used, *e.g.,* by an origin NAMC 110 based to a request from an initiator process, to request a remote memory read or write 10, respectively, from a target NAMC 110. In one aspect, these messages can be considered roughly analogous to MPI_Get and MPI_Put RMA messages, respectively. In an aspect, these can be considered unicast (one NAMC 110 to one other NAMC 110) communications. Some embodiments also provide for collective (*e.g.,* multicast and/or broadcast) messages that involve all NAMCs in a win group. MPI_Win_fence is an example of a collective message described here. Those skilled in art will understand from these examples that some embodiments can support a variety of different unicast and collective messages not described in detail herein.

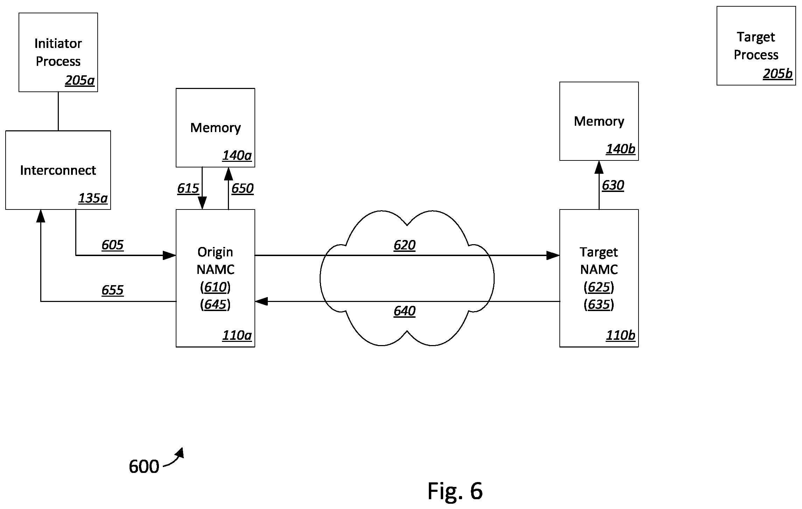

Figs. 6-8 illustrate exemplary communication models that can be employed in accordance with some embodiments. For illustrative purposes, much of the description below uses unidirectional messages as examples, but it should be understood that the principles illustrated by these models can apply to some or all unidirectional and bidirectional messages, including without limitation those described in Table 2 above.

The message flows illustrated by Figs. 6-8 describe the behavior of four entities involved. These four entities are, The initiator process (in some embodiments, a software entity executing on a processor, *e.g.,* as illustrated, a CPU 205), a local agent (in some embodiments, a hardware entity, such as a NAMA 100 or, as illustrated, a NAMC 110a), a remote agent (in some embodiments, a hardware entity, such as a NAMA 100 or, as illustrated, a NAMC 110b), and, in some cases, a target process (in some embodiments, a software entity executing on a processor, *e.g.,* as illustrated, a CPU 205b). In some embodiments, the remote agent is assumed to be on a different network node.

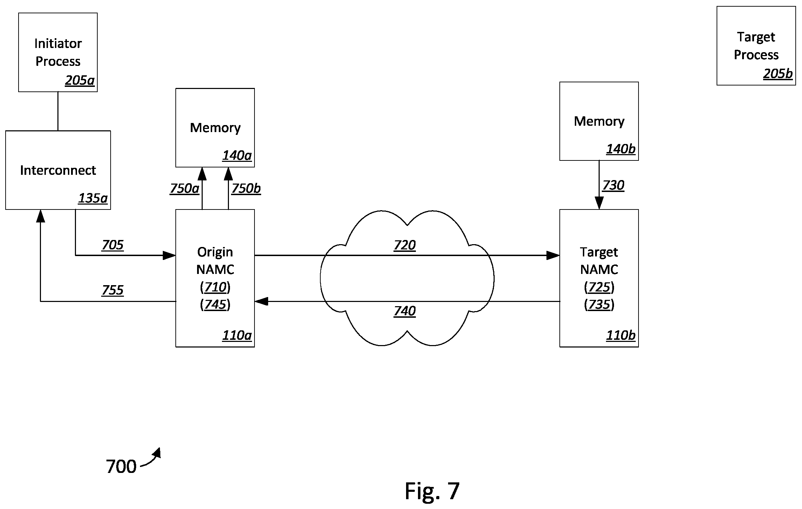

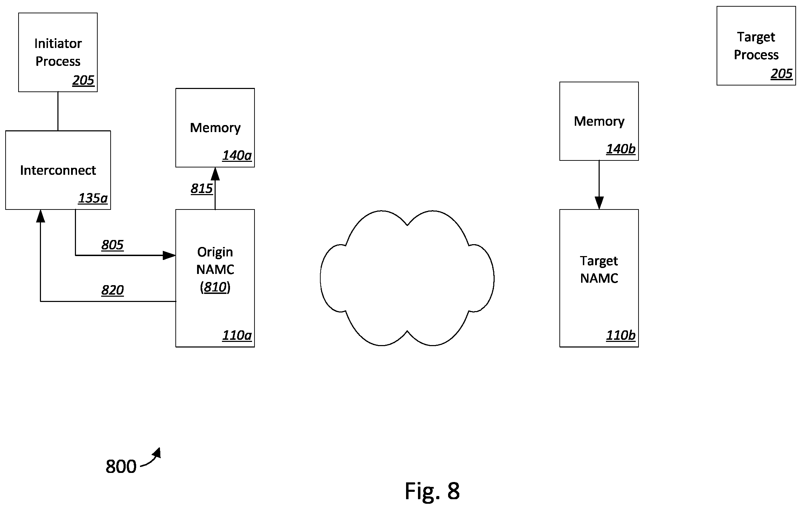

Fig. 6 is a communication model illustrating the message flow of a MPI_Put() operation and is described herein to provide a skilled artisan with the knowledge to implement this operation in accordance with various embodiments. Figs. 7 and 8 illustrate message flows for exemplary MPI_Get() and MPI_Win_Fence() operations, respectively. In the interest of brevity, these figures are described in less detail, but a skilled artisan will understand that the principles described with respect to Fig. 6 can be applied in the context of Figs. 7 and 8 as well.

In accordance with some embodiments, high performance application code (*e.g.,* artificial intelligence and/or machine learning function libraries) employ MPI_* function calls. Such calls might be compiled into low level code that uses the function identifier to search in a table for pointer to actual MPI function code and then makes a call to that pointer. The function pointer table might be populated at load time. In some embodiments, calls in the application code are replaced with call to a different function that, instead of calling MPI function, writes data to an identified memory zone located in user memory space. In an aspect, the written data can take the form of a p2aReq and/or can include a MPI message-identifier and appropriate MPI message parameters. In some embodiments, the memory zone can be easily created by writing a code that declares a few static variables of the p2aReq message type and then compiling the code along with the application code. In an aspect, static variables allows the zone's address to be programmed into a NAMA configuration as p2aMsgAddr field.

It should be appreciated that Figs. 6-8 illustrated the flow of one message from start (by a process) to end (by the namAgent local to that process). Generally, there might be many such messages in a pipeline or queue, and many embodiments therefore will provide context for *N* number of messages in such a pipeline or queue. If the total turnaround time of one message is *T* sec and expected throughput is *P* msg/sec, the number of messages *N* is given by the equation *N = P*T.* Thus if the expected throughput is 50M messages per second, and the turnaround time for one message is 10 µs, one need maintain the context of 500 messages.

In accordance with some embodiments, a NAMA can address two aspects of concurrency: (a) Multiple messages from a single entity and (b) multiple messages from different entities (*e.g.,* a local process and/or one or more peer NAMAs) in different win groups. In some embodiments, since a2aReq messages are self-contained, multiple concurrent messages within the same win group not required to be identified (even if they are out-of-order). In some embodiments, however, concurrent requests that belong to multiple win groups do need be identified (for ucMPCount adjustment, as an example) but for that, the group identifier ("win" handle) is there in the messages. Some embodiments might include a msgID (e.g., as described above ) in the a2a messages. The msgID gives unique identity to each message (of course within a limited time since at some time the ID might be reused).

As noted above, Fig. 6 illustrates major steps of an exemplary message flow for a MPI_Put() message involving an origin NAMC 110a and a target NAMC 110b. At operation 605, the initiator process (*e.g.,* running on CPU 205a) sends the MPI_Put() message to the locally connected NAMC 110a. In some embodiments, the initiator process performs a "write" or "move" or "store" of message words at p2aMsgAddr, *e.g.,* using any technique that allows NAMC 110a to access that data. Merely by way of example, the process might perform direct writes, *e.g.,* using a "first-in-first-out" (FIFO) technique, to write consecutive messages to the same address (*e.g.,* using DMA, using a message ring, etc.). In some cases, such writes might be accumulated in the processor's data cache from where they could come to nearest Interconnect node in a burst. In an aspect, some embodiments could allow an entire MPI message to fit in a single burst, *e.g.,* a 64B burst size can accommodate most MPI messages in accordance with some embodiments. This message might be categorized as Enhanced Memory Request (EMR) and more specifically as a p2aReq message.

At operation 610, the NAMC 110a matches the starting address of the write operation coming from the interconnect with p2aMsgAddr, and if the match is found, the NAMC 110a identifies the message as a p2aReq message from a local process. the NAMC 110b stores the whole message in local storage (*e.g.,* NAMA context memory 115 shown on Figs. 1A-1D). After storing the entire message, the NAMC 110a decodes the message and determines that the message is p2aReq (with msgSubtype as 0). The NAMC 110b also determines that the mpiMsgType implies that the message is MPI_Put. In some embodiments, the NAMC 110a increments ucMPICount for the win group (defined by the "win" handle). In an aspect, if the NAMC 110a received the message during multiple bursts, it might maintain sufficient context to concatenate fields of that message.

At operation 615, the NAMC 110a generates an a2aReq message comprising the data to be "put" (*i.e.,* an IO write request) to transmit to the target NAMC 110b. In some embodiments, the NAMC 110a might first use the integrated memory controller (or, in the case of a NAMA without an integrated controller, sends a read request to an external memory controller to get the "put" data from "origin_addr." The NAMC 110a can read the amount of data indicated by SizeOf(origin_datatype)*origin_count. Based on this data, the NAMC 110a creates a PFR message. The NAMC 110a can determine its own agentlD, *e.g.,* based on configuration variable, as well as the agentID of the destination namAgent (*e.g.,* NAMC 110b) located at "win" window, which can serve as the target memory handle. Using these identifiers, the NAMC 110a can generate an a2aReq message. In the embodiments illustrated by Fig. 6, the target NAMC 110b is accessible via a packet network, so the NAMC 110a might perform packetization of the a2aReq message. In some embodiments, the NAMC 110b stores all necessary header information (UDP port, IP address, etc.) for every potential peer agent, and the NAMC 110a therefore can add to the packet such header information relevant to the NAMC 110b. Once the packet(s) comprising the a2aReq message have been generated, the NAMC 110a sends the packet(s), *e.g.,* via network equipment 150, as discussed above. If the NAMC 110a is configured to communicate with network equipment 150 via an interconnect 135, *e.g.,* as illustrated by Fig. 1D, the NAMC 110a might add interconnect-node address information to the packet(s) to enable the packet(s) to be routed by interconnect to the network equipment 150.

Operation 620 illustrates the journey of the packetized a2aReq message (with any necessary additional routing headers) from NAMC 110a to the target NAMC 110b. At the destination network node, network equipment can deliver the a2aReq message (with any necessary additional routing headers) to the NAMC 110b either directly or via interconnect. If routed via interconnect, the network equipment might provide the a2aMsgAddr so that the Interconnect could write the a2aReq message to the NAMC 110b.

In some embodiments, certain aspects of operation 625 at NAMC 110b, in some embodiments, might parallel those of operation 610 at NAMC 110a. In this case msgSubtype might indicate that it is coming from another namAgent (*e.g.,* NAMC 110a) and the message can be a PFR request. In an aspect of some embodiments, NAMC 110b might increment its local ucMPICount (or ucMPICount_t) variable for the given "win," *e.g.,* upon receipt of the a2aReq message and/or decrement the variable on completion of operation 635 (below). At operation 630, the NAMC 110b writes the payload (*i.e.,* the data requested to be written to memory) from the a2aReq message to the address in the "win" area, *e.g.,* using the address calculation described in Table 6 with regard to the MPI_Put() message at the target NAMA.

At operation 635, the NAMC 110b might generate a CRM. In some embodiments, for example, an a2aCRM message might employ the format and/or fields described in Table 2. The NAMC 110b might add routing information to the a2aCRM message, packetize it, and/or send the generated packet(s) to the nearest switch port or network equipment. These operations can be similar to those described above with respect to operation 610. Operation 640 illustrates shows the journey of the a2aCRM message through the network to the origin NAMC 110b. Eventually this message reaches the source namAgent.

At operation 645, the NAMC 110a decrements local ucMPICount (for the given "win") and, at block 650, the NAMC 110a generates of a2pCRM message, which, in some aspects can indicate to the origin NAMA that the MPI_put operation(s) are done, so the origin NAMA can decrement its local ucMPICount_t, and if applicable, indicate to the initiator process the completion operation(s). The format and/or fields of the a2pCRM message in accordance with some embodiments are described in Table 2, above.

In some embodiments, an MPI_Accumulate() message flow might be similar to that of the MPI_Put() described with respect to Fig. 6. In some embodiments, however, at operation 635, instead of replacing the data, the target NAMC 110b might read the original data, perform the requested operation (as indicated by "op") and then write back the resulting data. Further details about this message type can be found in Table 6.

Fig. 7 illustrates an exemplary communication model for an MPI_Get() message flow 700. The operations 705-755 can be similar to the corresponding operations 605-655 of Fig. 6, except for the following distinctions: At operation 705, the initiator process (*e.g.,* running on CPU 205a) sends an EMR message embedding a MPI_Get() message, rather than an MPI_Put() message, to the locally connected NAMC 110a.

At operation 710, the NAMC 110a generates the a2aReq message in similar fashion to operation 605. Because the message is an MPI_Get() message, however, the NAMC 110a does not need to read any data. In one embodiment, the NAMC 110a might swap the source and target fields from a corresponding MPI_Get() type a2aReq message to generate an MPI_Put() type a2aReq message; in some cases, the NAMC 110a might modify the msgSubtype to indicate that such a swap has been performed. In other embodiments, this swapping might be performed at the target NAMC 110b.

At operation 725, , the target NAMC 110b receives and processes the a2aReq message in similar fashion to operation 625. Instead of writing data to the memory 140b, however, it reads the requested data from "win" memory at the specified address (*e.g.,* as described in Table 6) at operation 730. At operation 735, the target NAMC 110b generates a PFR a2aReq message from the message received from the origin NAMC 110a, with a msgSubtype to indicate that. Alternatively and/or additionally, the NAMC 110b might simply convert the incoming a2aReq message to a PFR message, *e.g.,* by changing the subtype appropriately. The target NAMC 110b then packetizes and transmits the message, *e.g.,* as described above.

At process 745, the origin NAMC 110a processes the incoming a2aReq message and determines from that message the data to write to the memory 140a of the initiator process. That data is written to the memory 140a at block 750, and at block 755, the origin NAMC 110a sends an a2p message to the initiator process. In this case, the message might be an a2pCRM message if enabled by the initiator's request, or the message might be omitted if the initiator process did not request confirmation of the MPI_Get() operation.

Fig. 8 illustrates major steps of an exemplary message flow for a MPI_Win_fence type message. In various embodiments, there can be many messages in this category. Merely by way of example, MPI_Win_start() and MPI_Win_complete() can define an access epoch; MPI_Win_post(), MPI_Win_wait() can define an exposure epoch. While a skilled artisan will appreciate that the impacted processes and sequence of setting and clearing fence-related flags vary depending on the message, all the fence related messages can employ a similar message flow to that illustrated by Fig. 8.

At operation 805, the initiator process sends a p2aReq message to the origin NAMC 110a, *e.g.,* as described with respect to operation 605 above, with a message type of MPI_Win_fence. At block 810, the NAMC 110a identifies the message as a fence message. Based, *e.g.,* on that identification, the NAMC 110a might determine whether the ucMPICount is zero for the "win" identified in the message. If not, the NAMC 110a, in some embodiments, sets the flag ucMPIFenceFlag (if it is not already set) and completes the operation. At that point, the NAMC 110a could return back to process the next message. The NAMC 110a might keep the ucMPIFenceFlag set until execution of one or more MPI message(s) in the future reduces the ucMPICount to zero.

At block 810, if the ucMPICount is zero (*e.g.,* at the arrival of MPI_Win_fence message or as a result of completion of other pending messages), the NAMC 110a might generate, store, and/or transmit an a2pCRM of fence type. In some embodiments, the message might be sent via a message ring; in others, it might not (*e.g.,* if the calling process is awaiting the return of the a2pCRM message). In such cases, there might be a separate location in memory for the NAMC 110a to store a2pCRM messages for different "win" groups (operation 815). In some embodiments, the NAMC 110a might be configured to send an interrupt message (operation 820) to indicate the completion of the fence; in that case a2pCRM message might not be generated. In some embodiments, operation 815 may involve sending a2pCRM message directly into the CPU's cache.

### Methods Performed by Various Embodiments

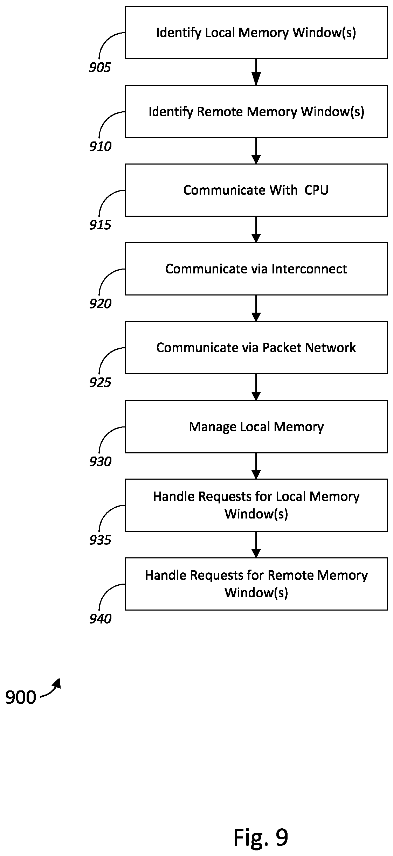

Figs. 9-15 illustrate various methods of managing memory with a memory agent, *e.g.,* a network aware memory agent, examples of which include, but are not limited to, the NAMA 100 and NAMC 110 described in detail above. A skilled artisan will appreciate that Figs. 9-15 illustrate methods comprising exemplary operations that can be performed, in part or in whole, by an agent, such as a NAMA 100 or NAMC 110 described in detail above, these operations are exemplary in nature, and the operation of such an agent often can vary depending on configuration variable settings and/or message fields as described in Tables 2-6 above. For example, in some cases, a method might describe the transmission of a response or might omit any such description. In implementation, however, whether and how an agent might respond can depend on settings such as the value of configuration variables such as enableA2pCRM, enableA2aCRM, enableFenceCRM, ucMPICount, ucMPIFenceFlag, and/or the like.

While Figs. 9-15 are illustrated as separate methods for descriptive purposes, it should be noted that some or all of the methods, and/or various operations thereof, of Figs. 9-15 can be performed in conjunction and/or can be considered part of a single method. Likewise, while the operations of these methods are displayed in a particular order, a skilled artisan will appreciate that various operations of different illustrated methods can be combined, reordered and/or omitted within the scope of various embodiments. "Managing" memory (*e.g.,* a system memory) can comprise some or all of such operations, and more generally can include any of the functionality (or any subset of functionality) ascribed to a NAMA herein, including without limitation, performing memory operations, controlling and/or providing access to memory and/or memory windows, providing access to and/or communication with a system memory, and/or the like.

The methods illustrated by Figs. 9-15 can employ and/or implement various functions, messages, and/or message flows, including without limitation the messages, message types, fields, functions, and/or variables described in Tables 2-6 above, as well as various techniques described in detail above. It should be appreciated, however, that the methods and operations illustrated by Figs. 9-15 are not limited to any particular architecture, methodology, message format, or data structure unless specifically noted in the context of a particular method or operation thereof.

Fig. 9 illustrates a method of operating a memory agent. In some embodiments, the memory agent might be a NAMA or NAMC, non-limiting examples of which are described above in the context of Figs. 1A-1D, 2-4, and 6-8.

At block 905, the method 900 comprises identifying one or more local memory windows, each of which might comprise at least a portion of a system memory (*e.g.,* in the context of the NAMA 100 of Figs. 1A-D, the memory 140, or in the context of the NAMC 110a of Figs. 2-4, the memory 140a). In some embodiments, *e.g.,* as noted above, an agent can be configured using configuration variables to identify one or more local memory windows ("win"), including, for example, a variable holding a win handle and/or variables storing address spaces in local memory (*e.g.,* 140) corresponding to each of the win handles. These variables can be used by the agent to identify local memory windows.

At block 910, the method 900 comprises identifying one or more remote memory windows, each of which might be managed by a remote memory agent (*e.g.,* in the context of the NAMC 110a of Figs. 2-4, the memory 140b managed by NAMC 110b). In some embodiments, *e.g.,* as noted above, an agent can be configured using configuration variables to identify one or more remote memory windows ("win"), including, for example, a variable holding a win handle and/or variables storing address spaces in remote memory (*e.g.,* 140b) corresponding to each of the win handles. These variables can be used by the agent to identify remote memory windows. In some embodiments, an agent might store communication information for each of the remote agents managing a remote memory window, such as an interconnect address and/or IP address of the remote memory agent; such information can be used to construct message headers and/or packetize request messages to be sent to the remote agent(s), *e.g.,* as described further elsewhere herein.

At block 915, the method 900 comprises communicating with a local CPU (*e.g.,* the CPU 205a of Figs. 2-4) via an interconnect, *e.g.,* as described in further detail above. For example, in some embodiments, an agent might communicate with a local CPU using a2p messages and/or p2a messages, as described in further detail herein. In some embodiments, communicating with a local CPU might comprise communicating with a process running on the local CPU, such as an application process, operating system process, and/or the like.

At block 920, the method 900 comprises communicating with a remote memory agent via the interconnect. As described herein, such communications can comprise MPI messages, which might take the form of various a2a message described elsewhere herein. At block 925, the method 900 comprises communicating with a remote memory agent via a packet network. The operation of communicating with a remote memory agent via a packet network, in some aspects, can be similar to communicating with a remote memory agent via an interconnect, except that, in certain embodiments, communicating via a packet network can further comprise packetizing outgoing messages and/or depacketizing incoming messages, as described in further detail herein.

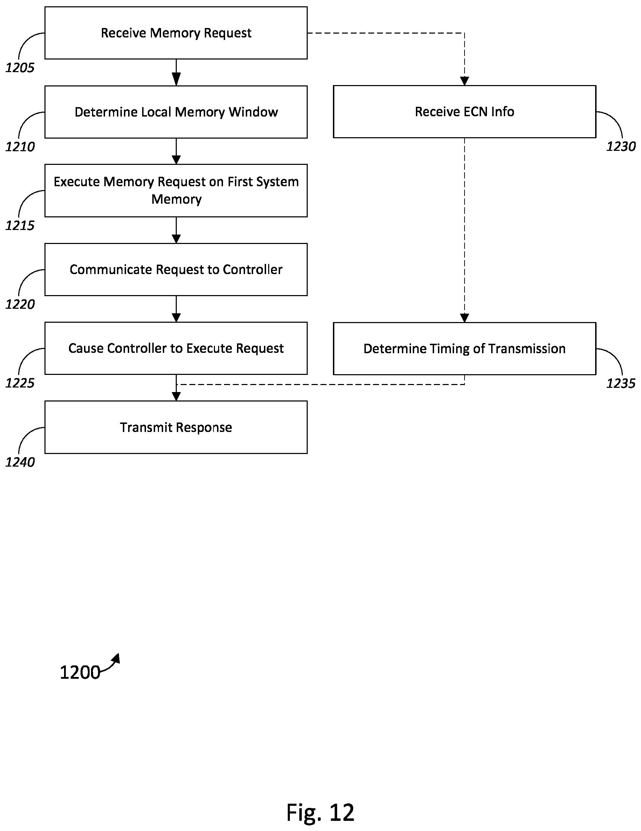

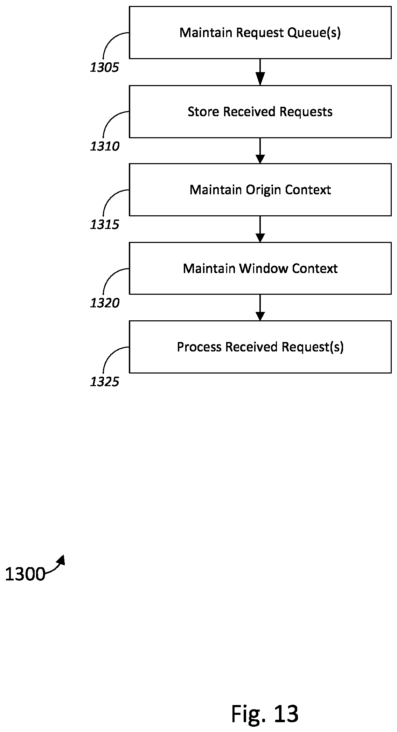

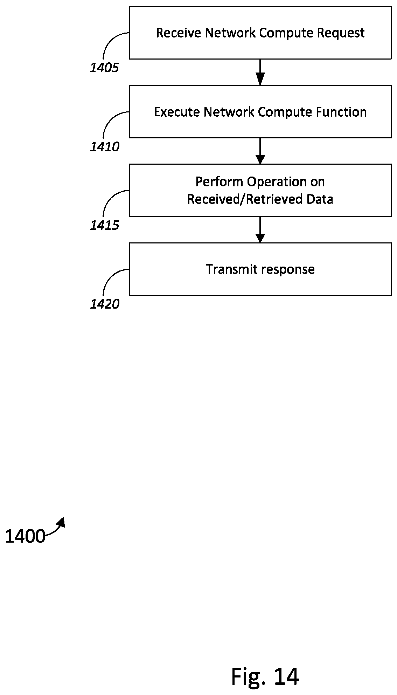

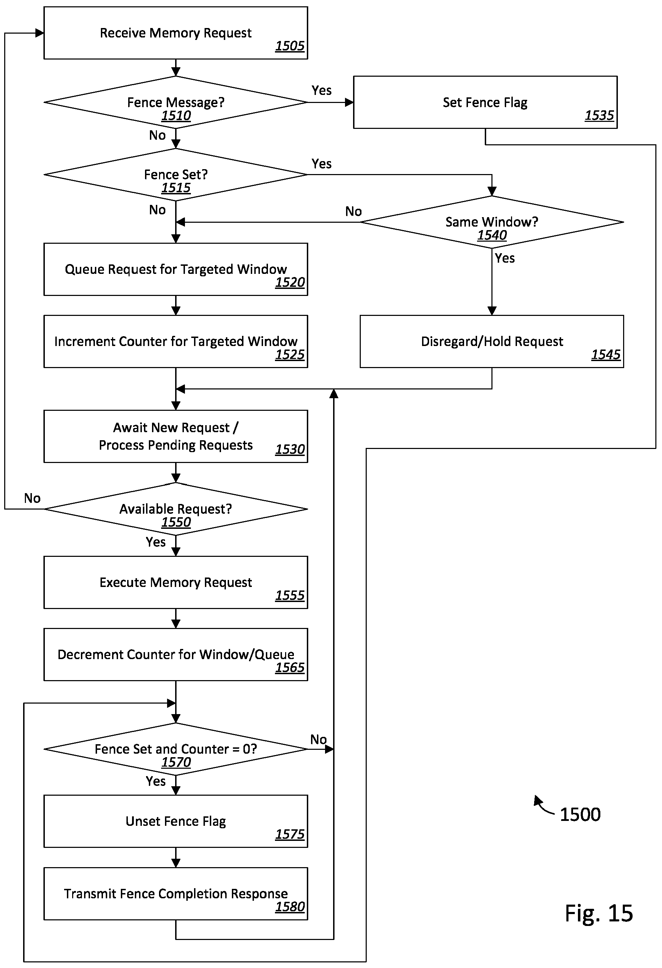

At block 930, the method 900 comprises managing a local memory. Managing a local memory can comprise a variety of operations, including without limitation handling memory IO requests addressed to that local memory (and/or addressed to memory windows comprising some or all of the local memory), *e.g.,* as described in the context of Fig. 12 and elsewhere herein, managing a queue of memory requests, *e.g.,* as described in the context of Fig. 13 and elsewhere herein, handling network compute requests, *e.g.,* as described in the context of Fig. 14 and elsewhere herein, and/or managing memory fences on local memory, *e.g.,* as described in the context of Fig. 15 and elsewhere herein), to name but a few examples. As used herein, in the context of a memory window, the verbs "address" and "direct," along with variations thereof, such as a memory request that "addresses" or is "addressed to" or "directed to" a memory window if that request seeks performance of an operation (*e.g.,* an IO operation, a fence operation, a network compute operation, etc.) on memory in that memory window *(e.g.,* having a memory address contained within the memory window) or otherwise pertains to memory within or associated with the memory window.

At block 935, the method 900 comprises handling requests for one or more local memory windows. A variety of operations, *e.g.,* as described in further detail herein, can be used to handle memory requests for a local memory window. Merely by way of example, Fig. 12 (discussed in further detail below) illustrates one exemplary method for handling a memory request addressed to a local memory window.

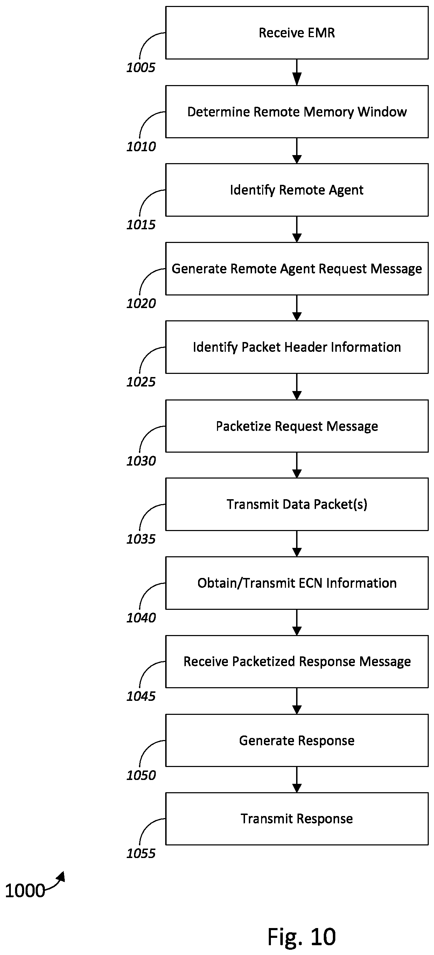

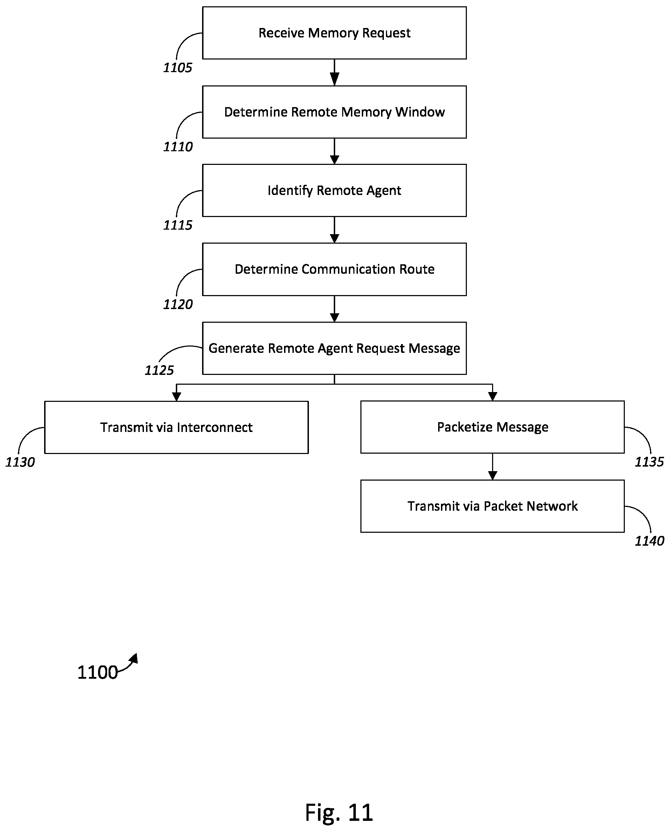

At block 940, the method 900 comprises handling requests for one or more remote memory windows. A variety of operations, *e.g.,* as described in further detail herein, can be used to handle memory requests for a remote memory window. Merely by way of example, Figs. 10 and 11, discussed in further detail below, illustrate exemplary methods of handling memory requests directed to remote memory windows.

For instance Fig. 10 illustrates a method 1000 of handling a memory request addressed to a remote memory window (*e.g.,* a memory window not managed by an agent performing the method 1000). In some embodiments, the method 1000 might implement a communication model similar to one or more of those described in connection with Figs. 6-8.

At block 1005, the method 1000 comprises receiving a memory request. In some cases, the memory request might be received from a local CPU and/or from a process executing on a local CPU (as discussed, for example, in the context of Figs. 6 and 7). The memory request might comprise a DMA request, an MPI message (*e.g*., encapsulated as a p2a EMR message, and/or the like, non-limiting examples of which are described in the Tables above. Merely by way of example, in some embodiments, the request comprises an MPI message from the local CPU over the interconnect. In other cases, the memory request might be received from a different source. The memory requests can include any sort of memory IOs or memory management operations, including without limitation those described herein, such as write IOs (*e.g.,* send, write, or put requests), read IOs (*e.g.,* recv, read, or get requests), network compute requests, fence requests, and/or the like.

At block 1010, the method 1000 comprises determining that the memory request addresses a remote memory window, *e.g.,* a memory window not comprising the first system memory. For instance, as described above in the context of Fig. 9 and elsewhere, the agent might comprise a memory storing configuration variables, and the agent might perform a lookup against one or more such variables to identify a memory window to which the request is addressed (also referred to herein as directed). In other cases, the request itself might include information from which the memory window can be identified and/or from which an identity of the memory window can be derived.

At block 1015, the method 1000 comprises identifying, based on a memory window identifier in the first memory request, a target memory agent associated with the memory window. Merely by way of example, in some cases, as noted above, a local agent can store an identity of each remote agent that manages one or more memory windows to which any requests from the local agent might be addressed.

At block 1020, the method 1000 comprises generating a remote agent request message, *e.g.,* an EMR a2aReq message corresponding to the memory request. Merely by way of example, in some cases, the request message might be generated from the request (*e.g.,* if the request is an MPI message from a local CPU), might have the memory request (and/or a portion thereof) embedded therein, might comprise the request message (and/or a portion thereof), and/or might be derived from the request message. In this context, the term "corresponding to" means that the request message has sufficient information to enable the remote agent to perform the requested memory operation (*e.g.,* read, write, or accumulate the data that is the subject of the request, fence a memory window corresponding to the request, etc.).

In some embodiments, the method 1000 comprises identifying packet header information associated with the target memory agent (block 1025), packetizing the request message (block 1030), and/or transmitting the one or more data packets for reception by the target memory agent, *e.g.,* via a packet network equipment (block 1035). Each of these operations might be performed, *e.g.,* as described in further detail above.

As described below with respect to Fig. 12, some embodiments can employ various techniques, *e.g.,* using explicit congestion notification (ECN) information, to avoid packet loss when exchanging EMR messages over a packet network. In such cases, the method 1000 can comprise obtaining ECN information and/or transmitting such ECN information (block 1040). One skilled in the art will appreciate that there are a number of techniques for performing such operations, and any of such techniques can be implemented in accordance with various embodiments. Merely by way of example, in some cases, a NAMA might mark one or more packet headers (*e.g.,* one or more bits of a traffic class field of the header) to indicate ECN capability, which can allow network equipment (*e.g.,* switches, routers) to further mark the packet to provide additional ECN information, *e.g.,* by modifying the bits of the traffic class header to indicate congestion experienced.

At block 1045, the method 1000 can comprise receiving a packetized response message from the target memory agent over the packet network, *e.g.,* via the packet network equipment. At block 1050, the method 1000 comprises generating a response to the original request. In some embodiments, the response can comprise an EMR message (*e.g.,* an a2P message, such as an a2pCRM message, etc.), which might encapsulate an appropriate MPI message, and/or the response to the request can be based at least in part on the packetized response message. One example of such an EMR message might be an a2pCRM message, as described in further detail herein. At block 1055, the method 1000 comprises transmitting the MPI response message over the interconnect for reception by the CPU.

Fig. 11 illustrates a method 1100 of managing a memory request addressed to a remote memory window (*e.g.,* a memory window not managed by an agent performing the method 1100).

In some aspect, various operations of the method 1100 can be similar to corresponding operations of the method 1000 of Fig. 10. For example, the method 1100 comprises receiving a memory request (block 1105), determining that the memory request addresses a remote memory window (block 1110), and identifying a target memory agent associated with the memory window (block 1115)

At block 1120, the method 1100 comprises determining a communication route for the target memory agent. In some aspects, the identity of the target memory agent might determine the communication route for that target memory agent. For example, as noted above, one or more configuration variables might provide an identity of the target memory agent for a given memory window and/or might comprise addressing information for that agent. Such addressing information can be used to determine a communication route for that agent. One or more variables (or another data structure) stored in the local agent's memory might identify a first target agent for a first memory window, indicate that the first target agent is accessible via an interconnect, and provide addressing information for communicating with the first target agent via the interconnect. One or more variables (or another data structure) might identify a second target agent for a second memory window, indicate that the first target agent is accessible via a packet network, and provide addressing information (*e.g.,* an IP address) for communicating with the second target agent via the packet network.

The method 1100 further comprises generating a remote agent request message (block 1125). This operation might be similar to operation 1020 described with respect to Fig. 10.

If the communication route indicates communications for the target memory agent are routed via the interconnect, the method 1100 comprises transmitting the request message via the interconnect. (block 1130).

if the communication route indicates communications for the target memory agent are routed via the packet network, the method 1100 comprises packetizing the message using the packet header information from the addressing information to produce one or more data packets (block 1135) and/or transmitting the request message as one or more packets via the packet network (block 1140). These operations can be similar to operations 1030-1035 described with respect to Fig. 10.

While not illustrated by Fig. 11, the method 1100 can further include operations similar to those illustrated by blocks 1040-1050 of Fig. 10.

Fig. 12 illustrates a method 1200 of handling a memory request addressed to a local memory window. In some embodiments, the method 1100 might be performed by an agent managing a local memory (*e.g.,* the NAMA 100 and the memory 140 of Figs. 1A-1D), such as a target NAMA.

At block 1205, the method 1200 comprises receiving a memory request from a peer memory agent, *e.g.,* via a communication interface. The memory request might be received via an interconnect (*e.g.,* from a local CPU or from a remote agent) or via a packet network (*e.g.,* from a remote agent).

At block 1210, the method 1200 comprises determining that the memory request addresses a local memory window. In some aspects, the request can be an MPI message, such as an a2a or p2a message, and the request might comprise a win handle field (*e.g.,* as described in the Tables and description above). By inspecting the win handle field, the local agent can identify the win handle, and based on configuration variables, determine that the win handle is addressed to a local memory window (*e.g*., a memory window comprising at least a portion of the system memory that the agent manages).

At block 1215, the method 1200 comprises executing the memory request on the first system memory, based on a determination that the memory request addresses the local memory window. In some cases, the method 1200 (or portions thereof) might be performed by a NAMA adjacent to (or otherwise in communication with) an external controller, and in such cases, executing the memory request might comprise communicating the first memory request to the memory controller (block 1220). In other cases, the method 1200 (or portions thereof) might be performed by a NAMC with an integrated memory controller; in such cases, the method 1200 can comprise causing the included memory controller to execute the first memory request on the first system memory (block 1225).

Although not illustrated on Fig. 12, the method 1200 can be adjusted depending on the nature of the request and/or how it was received. For example, in some cases, the response might comprise an MPI message, such as an a2a message or an a2p message, depending on the origin of the request. The type of message transmitted might depend on the nature of the request. For example, as illustrated by Fig. 6, if the request is an MPI_Get() request from a remote agent, the response message might comprise an a2aReq message, while if the request is an MPI_Put() message, the response might comprise an a2aCRM message. Examples of request types and the corresponding messages are described in further detail above.

As another example of such variation, if the request was received via a packet network, the method might further include depacketizing the request and packetizing the response for transmission over the packet network, *e.g.,* as described in further detail above. Further, as noted above, in some cases, messaging according to some embodiments can employ connectionless communications, and universal datagram protocol (UDP) packets, without requiring the overhead of connection-oriented protocols like terminal control protocol (TCP). In such cases, various embodiments might employ measures to reduce the risk of communication loss when transmitting data for a memory 10.

Merely by way of example, in some embodiments, the method 1200 can comprise receiving explicit congestion notification (ECN) information, *e.g.,* as part of the request referenced at block 1210, from a separate source, and/or the like (block 1230). Merely by way of example, as noted above, one or more request packets might be marked with ECN information (*e.g.,* a marking in one or more bits of a traffic class field in the packet header to indicate ECN capability and/or to indicate that congestion was experienced in the transport of that packet). At block 1235, the method 1200 might comprise determining the timing of the transmission of the one or more response IP packets to reduce risk of communication loss (*e.g.,* the timing of the transmission referenced by block 1040, discussed below). This determination can be based at least in part on the ECN information. For example, the local agent might receive ECN information periodically and/or track or estimate congestion trends based on this information. The agent might then delay transmission of the response packets until the ECN information indicates that current congestion is low compared to historical values, that congestion estimated that congestion will rise in the future, and/or that congestion is currently at an acceptable level (*e.g.,* below a defined threshold) and/or is estimated to remain at an acceptable level for a defined period of time to allow for low-risk transmission of the response packets.

At block 1240, the method 1200 comprises transmitting a response for reception by the peer memory agent. As noted above, the techniques for transmitting a response can vary depending on the nature of the request and/or implementation-specific details (such as whether an embodiment implements ECN, etc.).

Fig. 13 illustrates a method 1300 of managing a queue of memory requests. In some embodiments, the some or all of the method 1300 might be performed by an agent managing a local memory (*e.g.,* the NAMA 100 and the memory 140 of Figs. 1A-1D).

At block 1305, the method 1300 comprises maintaining at least one request queue. In some embodiments, request queues can be stored in an agent's onboard memory (*e.g.,* NAMA context memory 115 of Figs. 1A-1D). In an aspect, each queue can be used to store requests for a particular memory window (or for a plurality of memory windows) managed by the agent until those requests can be processed. Thus, at block 1310, the method 1300 comprises storing a plurality of received requests in the at least one queue.

At block 1315, the method 1300 comprises maintaining an origin context associating each message in the queue with an origin of that message. In some embodiments, the origin context identifies an origin of the request (*e.g.,* a remote agent, a process running on a local CPU, etc.); this information can include, *e.g.,* the value of the "agentIDSrc" field of the message (as described in the context of various messages in Table 2 for example). At block 1320, the method 1300 comprises maintaining a window context associating each message in the queue with a memory window to which that request is directed. The window context might include, for example, a window handle, *e.g.,* the value of the "win" field of the request message, as (described above in the context of various message types in Table 2). This context data can be stored with the stored request and/or can be stored in a location (*e.g.,* in the NAMA context memory 115 addressing, addressed by, or otherwise linked/to from the request).

At block 1325, the method 1300 comprises processing the plurality of received requests in the queue according to the origin context and the window context. For example, the agent might process each request in a particular order, and when processing that request might refer to the origin context and window context to determine how to process the request (*e.g.,* a location or window in system memory 140 to use to process the request, where and how to send a response to the request, etc.).

Fig. 14 illustrates a method 1400 of handling a network compute request. In some embodiments, he method 1400 might be performed by an agent managing a local memory (*e.g.,* the NAMA 100 and the memory 140 of Figs. 1A-1D).

At block 1405, the method 1400 comprises receiving an in-network compute request. The compute request can request performance of any compute operation the agent is capable of performing and/or configured to perform, such as arithmetic operations, logical operations, etc. involving one or more values stored in a memory window managed by the agent. Examples can include, without limitation, an accumulate operation (such as the MPI_Accumulate(), MPI_Get_Accumulate(), and MPI_Fetch_and_op() requests as described in further detail in Table 6, for example.

At block 1410, the method 1400 comprises executing an in-network compute function in response to receiving the in-network compute request. In some aspects, the agent might comprise hardware circuitry configured to perform such functions and/or might employ firmware, a processor, or external compute resources to perform such functions. In some embodiments, the compute function might comprise performing an operation on data provided with the request and/or data retrieved from the local memory, *e.g.,* as part of the request (block 1415). At block 1420, the method 1400 comprises transmitting a response to the in-network compute request, *e.g.,* using any of the variety of techniques described herein, as appropriate for the origin of the request.

Fig. 15 illustrates a method 1500 of managing a fence on a local memory window. In some embodiments, the method 1500 might be performed by an agent managing a local memory (*e.g.,* the NAMA 100 and the memory 140 of Figs. 1A-1D). In some embodiments the method 1500 can be used to implement the communication model described above with respect to Fig. 8.

At block 1505, the method 1500 comprises receiving a memory request addressed to a local memory window. As noted above, in some embodiments, a single NAMA can manage multiple memory windows. In such embodiments, each request might target (*e.g.,* be directed to) a particular memory window, for example by including a win handle, as a field in a memory request, *e.g.,* as described above. For purposes of this example, we will assume that a particular request is directed to a window referred to as Win_A.

In some cases, the memory request comprises a fence message from a particular origin (*e.g.,* a particular local initiator process, an origin NAMA-in which case the method 1500 might be performed by the target NAMA-and/or the like). Examples of such fence messages are described, *e.g.,* in Table 6 and elsewhere herein. Hence, at block 1510, the method 1500 can comprise determining whether the request comprises a fence message. For purposes of this example, If the request is not a fence request (*e.g.,* is a request for another memory operation, such as MPI_Get(), MPI_Put(), MPI_Accumulate(), etc.), the method 1500 can comprise, at block 1515, determining whether a fence has been set for the window targeted by the request (*e.g.,* in this example, determining whether a fence flag has been set for Win_A). If no fence has been set for the targeted window, the method can include, at block 1520, queuing the request to be executed (*e.g.,* for any requested IO or other memory operations to be performed). As noted herein, in some cases, the queue might have a context for the relevant window (here, Win_A). Then, at block 1525, the method 1500 can comprise incrementing a pending request counter (*e.g*., a ucMPICount field) for the targeted window, indicating that there are requested memory operations directed to the targeted window that have not yet been executed.

At this point, the method 1500 then might proceed to block 1530, where the method 1500 can include awaiting new requests and/or processing existing requests, *e.g.,* as described in further detail below.

Returning briefly to block 1510, if the request is a fence message, the method 1500 can comprise, at block 1535, setting a fence flag to establish a memory fence on the targeted memory window (in this case, Win_A). At this point, the method 1500 can proceed to block 1570 to determine whether the fence flag is set (which, in this case would be yes) and a pending requests counter for that memory window is zero. This procedure is described in further detail below.

Returning to block 1515, if the instant request is not a fence request, and a fence has been set, the method 1500 can include determining whether the request is directed to the same window on which the fence is set (block 1540). If the request is targeted to a different window (for example, if the request targets Win_A and a fence is set on Win_B), the method proceeds to block 1520, where the request is queued for the targeted window and block 1525, where a counter is incremented for the targeted window. One the other hand, if the request is directed to a window on which a fence has been set (for example, if the request targets Win_A, and a fence has been set on Win_A), the method 1500 can include, at block 1545, holding the request (*e.g.,* to be executed after the pending request counter for Win_A reaches zero and/or the fence is not set for Win_A) and/or simply disregarding the request, in which case the origin of the request can try again later with a new fence request. At this point, the method returns to block 1530.

At block 1530, then, the process can include awaiting new incoming requests and/or processing pending requests. In some embodiments, these operations can be performed in parallel, while in others, the method 1500 might only process pending requests only while no new requests are incoming.

Thus, at block 1550, if a new memory request (of any type) is available (*e.g.,* if a new memory request has been received from any origin), the method 1500 can reiterate from block 1505, as illustrated. Simultaneously, and/or when no new request is received, the method 1500 can comprise executing one or more memory requests, e.g., by performing any requested IO or other memory operation(s) on the local memory in whichever window the request targets (block 1555). In some embodiments, memory requests in different queues (e*.g.,* targeting different windows) can be performed in parallel, while in other cases, requests might be performed serially. After the request has been executed, the method 1500 can comprise decrementing the pending requests counter for whichever window/queue applies (block 1565), *e.g.,* the queue for the window targeted by the request and/or the queue into which the request was earlier placed (which, in many embodiments, will be the same queue for the reasons described above).

In some cases, the method 1500 includes checking to see whether the pending requests counter for a window has reached zero. This can occur at any time, and/or in particular, if a fence flag has been set (e.g., at block 1535) and/or if the counter for that window has been decremented (e.g., at block 1565). If there is no fence flag currently set on the window to which the executed request was targeted and/or if the pending requests counter is greater than zero (block 1570), the method can return to block 1530. If a fence flag is set on that window, however, and the counter for that window has reached zero, the method 1500 can comprise unsetting (*i.e.,* clearing) the fence flag (block 1575), and/or transmitting a fence completion response message to the origin (e.g., initiator process, origin NAMA, etc.) that originally requested the fence flag (block 1580), for example using various techniques described herein for sending completion messages. At that point, the method 1500 can continue from block 1530.

### Exemplary Computing Environment

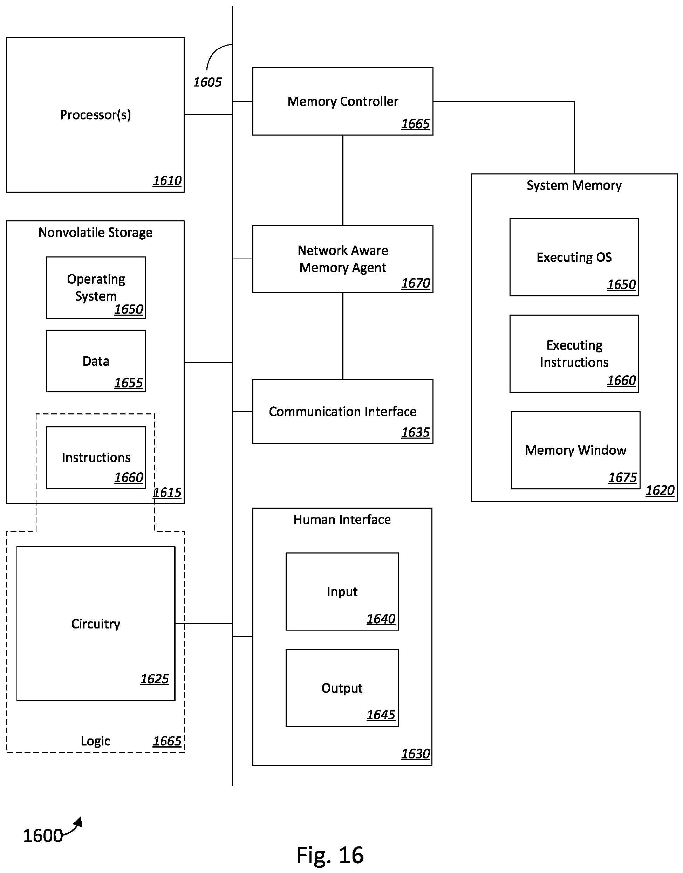

Fig. 16 is a block diagram illustrating an example of a device 1600, which can function as described herein, including without limitation serving as a compute node, a computer system comprising a NAMA or NAMC, etc. in accordance with various embodiments, and/or performing some or all operations of the methods described herein. No component shown in Fig. 16 should be considered necessary or required by each embodiment. For example, many embodiments may not include a processor and/or might be implemented entirely in hardware or firmware circuitry. Similarly, many embodiments may not include input devices, output devices, or network interfaces.

With that prelude, as shown in Fig. 16, the device 1600 may include a bus 1605. The bus 1605 can include one or more components that enable wired and/or wireless communication among the components of the device 1600. The bus 1605 may couple together two or more components of Fig. 16, such as via operative coupling, communicative coupling, electronic coupling, and/or electric coupling. Such components can include a processor 1610 nonvolatile storage 1615, system memory (*e.g.,* random-access memory (DRAM)) 1620, and/ or circuitry 1625. In some cases, the system 1600 can include human interface components 1630 and/or a communication interface 1635.

While these components are displayed as integrated within the device 1600, certain components might be located external from the device 1600. As such, the device 1600 might include, instead of or in addition to the components themselves, facilities for communicating with such external devices, which therefore can be considered part of the device 1600 in some embodiments.

Merely by way of example, the nonvolatile storage 1615 can include a hard disk drive (HDD), a solid-state drive (SSD), and/or any other form of persistent storage (*i.e.,* storage that does not require power to maintain the state of the stored data). While such storage often is incorporated within the device 1600 itself, such storage might be external to the device 1600 and can include external HDD, SSD, flash drives, or the like, as well as networked storage (*e.g.,* shared storage on a file server, etc.), storage on a storage area network (SAN), cloud-based storage, and/or the like. Unless the context dictates otherwise, any such storage can be considered part of the device 1600 in accordance with various embodiments. In an aspect, the storage 1615 can be non-transitory.

Similarly, the human interface 1630 can include input components 1640 and/or output components 1645, which can be disposed within the device 1600, external to the device 1600, and/or combinations thereof. The input components 1640 can enable the device 1600 to receive input, such as user input and/or sensed input. For example, the input components 1640 may include a touch screen, a keyboard, a keypad, a mouse, a button, a microphone, a switch, a sensor, a global positioning system sensor, an accelerometer, a gyroscope, and/or an actuator. In some cases, such components can be external to the device 1600 and/or can communicate with components internal to the device 1600 such as input jacks, USB ports, Bluetooth radios, and/or the like. Similarly, the output component 1645 can enable the device 1600 to provide output, such as via a display, a printer, a speaker, and/or the like, any of which can be internal to the device 1600 and/or external to the device but in communication with internal components, such as a USB port, a Bluetooth radio, a video port, and/or the like. Again, unless the context dictates otherwise, any such components can be considered part of the device 1600 in accordance with various embodiments.

From these examples, it should be appreciated that various embodiments can support a variety of arrangements of external and/or internal components, all of which can be considered part of the device 1600. In certain embodiments, some or all of these components might be virtualized; examples can include virtual machines, containers (such as Docker containers, etc.), cloud computing environments, platform as a service (PAAS) environments, and/or the like.

In an aspect, the nonvolatile storage 1615 can be considered a non-transitory computer readable medium. In some embodiments, the nonvolatile storage 1615 can be used to store software and/or data for use by the device 1600. Such software/data can include an operating system 1650, data 1655, and/or instructions 1660. The operating system can include instructions governing the basic operation of the device 1600 and can include a variety of personal computer or server operating systems, embedded operating systems, and/or the like, depending on the nature of the device 1600. The data 1655 can include any of a variety of data used or produced by the device 1600 (and/or the operation thereof), such as media content, databases, documents, and/or the like. The instructions 1660 can include software code, such as applications, object code, assembly, binary, etc.) used to program the processor 1610 to perform operations in accordance with various embodiments. In an aspect, the operating system 1650 can be considered part of the instructions 1660 in some embodiments.

The processor 1610 can include one or more of a central processing unit, a graphics processing unit, a microprocessor, a controller, a microcontroller, a digital signal processor (DSP), programmable logic (such as a field-programmable gate array (FPGA), an erasable programmable logic device (EPLD), or the like), an application-specific integrated circuit (ASIC), a system on a chip (SoC) and/or another type of processing component. The processor 1610 can be implemented in hardware, firmware, or a combination of hardware, firmware and/or software. In some implementations, the processor 1610 includes one or more processors capable of being programmed to perform one or more operations or processes described elsewhere herein.

For example, in some embodiments, the device 1600 can comprise logic 1665. Such logic can be any sort of code, instructions, circuitry, or the like that can cause the device 1600 to operate in accordance with the embodiments herein (*e.g*., to perform some or all of the processes and/or operations described herein). Merely by way of example, the logic 1665 can include the instructions 1660, which might be stored on the nonvolatile storage 1615 as noted above, loaded into working memory 1620, and/or executed by the processor 1610 to perform operations and methods in accordance with various embodiments. In an aspect, these instructions 1660 can be considered to be programming the processor 1610 to operate according to such embodiments. In the same way, the operating system 1650 (to the extent it is discrete from the instructions 1660) might be stored on the nonvolatile storage 1615, loaded into working memory 1620, and/or executed by a processor 1610.

Alternatively, and/or additionally, logic can include the circuitry 1625 (*e.g*., hardware or firmware), which can operate independently of, or collaboratively with, any processor 1610 the device 1600 might or might not have. (As noted above, in some cases, the circuitry 1650 itself can be considered a processor 1610.) The circuitry 1625 might be embodied by a chip, SoC, ASIC, programmable logic device (FPGA, EPLD, etc.), and/or the like. Thus, some or all of the logic enabling or causing the performance of some or all of the operations described herein might be encoded in hardware or firmware circuitry (*e.g*., circuitry 1650) and executed directly by such circuitry, rather than being software instructions 1660 loaded into working memory 1620. (In some cases, this functionality can be embodied by hardware instructions). Thus, unless the context dictates otherwise, embodiments described herein are not limited to any specific combination of hardware, firmware, and/or software.

The device 1600 can also include a communication interface 1635, which can enable the device 1600 to communicate with other devices via a wired (e.g., electrical and/or optical) connection and/or a wireless (RF) connection. For example, the communication interface 1660 may include one or more RF subsystems (such a Bluetooth subsystem, such as those described above, for example, a Wi-Fi subsystem, a 5G or cellular subsystem, etc.). Some such systems can be implemented in combination, as discrete chips, as SoCs, and/or the like. The communication interface 1635 can further include a modem, a network interface card, and/or an antenna. In some cases, the communication interface 1630 might comprise a plurality of I/O ports, each of which can be any facility that provides communication between the device 1600 and other devices; in particular embodiments, such ports can be network ports, such as Ethernet ports, fiber ports, etc. Other embodiments can include different types of I/O ports, such as serial ports, pinouts, and/or the like. Depending on the nature of the device 1600, the communication interface 1635 can include any standard or proprietary components to allow communication as described in accordance with various embodiments.

In some embodiments, the device 1600 comprises a memory controller 1670, which performs memory IO operations on the system memory 1620, and/or a NAMA 1675, which can manage one or more memory windows 1680, *e.g*., as described in detail above. In some embodiments, the NAMA 1675 can be similar to the NAMAs 100 described above. In some embodiments, the memory controller 1670 might be external to, and/or adjacent to, the NAMA 1675. In some embodiments, the NAMA 1675 might incorporate, include, be integrated with, be packaged with, comprise, and/or be a component of the memory controller 1670, in which case the NAMA 1675 might be a NAMC similar to the NAMCs 110 described above.

In some embodiments, the NAMA 1675 might comprise logic that causes or configures the NAMA to perform various operations, including without limitation the methods, operations, and/or other functionality described above. In some embodiments, this logic might be similar to the logic 1665 described above. For example, the NAMA 1675 might include an processor and software or firmware instructions similar to instructions 1660, which might be executable on an internal processor of the NAMA and/or the processor(s) 1610 of the device, and/or the NAMA 1765 might not include its own processor and/or might comprise hardware circuitry similar to circuitry 1625 that causes the NAMA 1675 to operate independently of any processor and/or in conjunction with a processor internal to the NAMA 1675 and/or other processors external to the NAMA 1675. including without limitation the processor(s) 1610 of the device 1600.

In some embodiments, the memory window 1675 might comprise all of the system memory 1620, in which case, for example, the executing OS 1650 and/or instructions 1660 might be stored within the memory window 1670. In other cases, the memory window 1670 might be separate from the memory area that stores the executing OS 1650 and/or the instructions. In some embodiments, a plurality of memory windows 1675 might comprise different portions of the system memory 1620.

In some embodiments, the bus 1605 might comprises a plurality of buses. One such bus might be an interconnect and/or a front side bus, such as the interconnect 135 described above. In some embodiments, all communications between the processor 1610 and the memory controller 1605 might flow through the NAMA 170. In other embodiments, the processor might have a separate route of communications (*e*.*g*., directly via the bus 1605.

As noted above, the communication interface of the device 1635 can include and/or can communicate such as a NIC, an internal or external switch, and/or the like. In an aspect, the communication interface 1635 therefore can function, in some embodiments, as network equipment for the NAMA 1675, *e.g*., by providing connectivity with a packet network. As noted above, the NAMA 1675 might communicate directly with such network equipment and/or might communicate with the equipment via the bus 1605 and/or a portion thereof such as an interconnect.

The NAMA 1675, memory controller 1665, and/or system memory 1665 might share a housing with other components of the device 1600, and/or one or more of the components of the device 1600 (including but not limited to the NAMA 1675, memory controller 1665, and/or system memory 1665) might be physically separated from other components of the device 1600).

### Additional Examples

Certain exemplary embodiments are described below. Each of the described embodiments can be implemented separately or in any combination, as would be appreciated by one skilled in the art. Thus, no single embodiment or combination of embodiments should be considered limiting.

A network aware memory agent in accordance with some embodiments comprises a memory interface configured to communicate with a first system memory comprising random access memory (RAM), and at least one communication interface configured to communicate with: a first central processing unit (CPU) and a packet network equipment. In some embodiments, the communication interface comprises an interconnect interface providing communication with the CPU; and a network interface providing communication with the packet network equipment. In some cases, the interconnect comprises a front-side bus of the CPU.

The network aware memory agent might further comprise logic to perform one or more operations. In particular embodiments, the logic is implemented as hardware circuitry. In other embodiments, some of the logic might be implemented as firmware or software executable by a processor.

In some embodiments, the logic includes logic to identify a first memory window comprising the first system memory, logic to communicate with a local CPU via the interconnect, and logic to receive a first memory request. In some embodiments, the logic might further comprise logic to determine that the first memory request addresses a second memory window not comprising the first system memory; logic to identify, based on a memory window identifier in the first memory request, a target memory agent associated with the second memory window; logic to generate a first enhanced memory request (EMR) agent-to-agent request (a2aReq) message embedding corresponding to the first memory request; logic to identify packet header information associated with the target memory agent; and/or logic to packetize the first EMR a2aReq message using the packet header information to produce one or more data packets; and logic to transmit the one or more data packets for reception by the target memory agent via the packet network equipment.

In some embodiments, the first memory request is received as a message passing interface (MPI) message from the local CPU over the interconnect; in such embodiments, the network aware memory agent might further comprise logic to generate the first EMR a2aReq message from the MPI message.

In some embodiments, the network aware memory agent further comprises logic to receive an in-network compute request; logic to execute an in-network compute function in response to receiving the in-network compute request; and logic to transmit a response to the in-network compute request. In an aspect of some embodiments, the in-network compute request comprises an accumulate request comprising a first set of data; in such embodiments, the logic to execute an in-network compute function might comprise logic to perform an operation with the first set of data.

In some embodiments, the network aware memory agent further comprises logic to receive a packetized response message from the target memory agent over the packet network via the packet network equipment, logic to generate an MPI response message based at least in part of on the packetized response message, and/or logic to transmit the MPI response over the interconnect for reception by the CPU.

In some embodiments, the network aware memory agent further comprises logic to receive a second memory request addressed to the first memory window; the second memory request might a fence message from a request origin. In some embodiments, the network aware memory agent thus might further comprise logic to set a fence flag for the first memory window; logic to receive a plurality of subsequent memory requests from the request origin directed to the first memory window; logic to increment a counter upon receipt of each of the plurality of subsequent memory requests; logic to execute each of the plurality of subsequent memory requests directed to the first memory request; logic to decrement the counter upon execution of each of the plurality of subsequent memory requests; and/or logic to clear the fence flag upon determining that the counter has been decremented to zero; and logic to transmit a completion response message upon determining that the counter has been decremented to zero.

In some embodiments, the network aware memory agent further comprises logic to receive a second memory request addressed to a second memory window; logic to identify a target memory agent associated with the second memory window; logic to determine a communication route for the target memory agent; and/or logic to generate a second a2aReq message encapsulating the second memory request; The network aware memory agent might also comprise logic to transmit the second EMR message via the interconnect if the communication route indicates communications for the target memory agent are routed via the interconnect and/or logic to transmit the second EMR message as one or more packets via the packet network if the communication route indicates communications for the target memory agent are routed via the packet network.

In some embodiments, the network aware memory agent further comprises logic to receive a second memory request from a peer memory agent via the at least one communication interface; logic to determine that the second memory request addresses the first memory window; logic to execute the second memory request on the first system memory, based on a determination that the second memory request addresses the first memory window; and logic to transmit a response for reception by the peer memory agent.

In some embodiments, the memory interface is coupled with a memory controller, and the logic to execute the first memory request comprises logic to communicate the first memory request to the memory controller. In some embodiments, the network aware memory agent further includes a memory controller that is coupled with the first system memory, and the logic to execute the first memory request on the first system memory comprises logic to cause the included memory controller to execute the first memory request on the first system memory.

In some embodiments, the second memory request comprises a write command, and/or the response comprises a completion message indicating data was written to the first system memory. In some embodiments, the second memory request comprises a read command, and/or the response comprises data read from the first system memory.

In some embodiments, the second memory request comprises a compute express link (CXL) message received over the interconnect.

In some embodiments, the second memory request comprises one or more request Internet protocol (IP) packets received over the packet network via the packet network equipment, and the one or more response packets comprises one or more response IP packets. In some embodiments, the network aware memory agent further comprises logic to receive explicit congestion notification (ECN) information; and logic to determine a timing of transmission of the one or more IP packets (*e.g*., the one or more response IP packets) to reduce risk of communication loss, based at least in part on the ECN information.

In some embodiments, the network aware memory agent further comprises logic to maintain at least one request queue and/or logic to store a plurality of received requests in the at least one queue. In some embodiments, the network aware memory agent further comprises logic to maintain an origin context associating each message in the queue with an origin of that message and/or logic to maintain a window context associating each message in the queue with a memory window to which that request is directed. In some embodiments, the network aware memory agent further comprises logic to process the plurality of received requests in the queue according to the origin context and the window context.

A network aware memory controller in accordance with some embodiments comprises a memory controller. The memory controller might comprise a memory interface configured to communicate with a first system memory comprising random access memory (RAM). In some embodiments, the network aware memory controller further comprises an interconnect interface configured to communicate with an interconnect providing communication with a first central processing unit (CPU) and a packet network interface configured to communicate with packet network equipment. In some embodiments, the network aware memory controller further comprises logic to transmit and receive memory requests via the packet network.

Methods in accordance with some embodiments can comprise performing any of the operations described above. In some embodiments, such methods can be performed by a network aware memory agent which might comprise logic to cause the network aware memory agent to perform such operations, for example as described above. Merely by way of example, one such method might comprise identifying, *e.g*., by a network aware memory agent, a first memory window comprising a first system memory; the first system memory might comprise random access memory (RAM). In some embodiments, the network aware memory agent comprises a memory interface configured to communicate with a first system memory comprising random access memory (RAM), and at least one communication interface configured to communicate with a first central processing unit (CPU) and packet network equipment.

In some embodiments, the method comprises communicating, *e.g*., by the network aware memory agent, with a local CPU via the interconnect; receiving, *e.g*., by the network aware memory agent, a first memory request; determining, *e.g*., by the network aware memory agent, that the first memory request addresses a second memory window not comprising the first system memory; and/or identifying, *e.g*., by the network aware memory agent and based on a memory window identifier in the first memory request, a target memory agent associated with the second memory window.

In some embodiments, the method comprises generating, *e.g*., by the network aware memory agent, a first enhanced memory request (EMR) a2aReq message embedding the first memory request; identifying, *e.g*., by the network aware memory agent, packet header information associated with the target memory agent; packetizing, *e.g*., by the network aware memory agent, the a2aReq message using the packet header information to produce one or more data packets; and/or transmitting, *e.g*., by the network aware memory agent, the one or more data packets for reception by the target memory agent via the packet network equipment

### Conclusion

In the foregoing description, for the purposes of explanation, numerous details are set forth to provide a thorough understanding of the described embodiments. It will be apparent to one skilled in the art, however, that other embodiments may be practiced without some of these details. In other instances, structures and devices are shown in block diagram form without full detail for the sake of clarity. Several embodiments are described herein, and while various features are ascribed to different embodiments, it should be appreciated that the features described with respect to one embodiment may be incorporated with other embodiments as well. By the same token, however, no single feature or features of any described embodiment should be considered essential to every embodiment of the invention, as other embodiments of the invention may omit such features.

Thus, the foregoing description provides illustration and description of some features and aspect of various embodiments, but it is not intended to be exhaustive or to limit the embodiments in general to the precise form disclosed. One skilled in the art will recognize that modifications may be made in light of the above disclosure or may be acquired from practice of the implementations, all of which can fall within the scope of various embodiments. For example, as noted above, the methods and processes described herein may be implemented using software components, firmware and/or hardware components (including without limitation processors, other hardware circuitry, custom integrated circuits (ICs), programmable logic, etc.), and/or any combination thereof.

Further, while various methods and processes described herein may be described with respect to particular structural and/or functional components for ease of description, methods provided by various embodiments are not limited to any particular structural and/or functional architecture but instead can be implemented in any suitable hardware configuration. Similarly, while some functionality is ascribed to one or more system components, unless the context dictates otherwise, this functionality can be distributed among various other system components in accordance with the several embodiments.

Likewise, while the procedures of the methods and processes described herein are described in a particular order for ease of description, unless the context dictates otherwise, various procedures may be reordered, added, and/or omitted in accordance with various embodiments. Moreover, the procedures described with respect to one method or process may be incorporated within other described methods or processes; likewise, system components described according to a particular structural architecture and/or with respect to one system may be organized in alternative structural architectures and/or incorporated within other described systems. Hence, while various embodiments are described with or without some features for ease of description and to illustrate aspects of those embodiments, the various components and/or features described herein with respect to a particular embodiment can be substituted, added and/or subtracted from among other described embodiments, unless the context dictates otherwise.

As used herein, the term "component" is intended to be broadly construed as hardware, firmware, software, or a combination of any of these. It will be apparent that systems and/or methods described herein may be implemented in different forms of hardware, firmware, and/or a combination of hardware and software. The actual specialized control hardware or software code used to implement these systems and/or methods does not limit any embodiments unless specifically recited in the claims below. Thus, when the operation and behavior of the systems and/or methods are described herein without reference to specific software code, one skilled in the art would understand that software and hardware can be used to implement the systems and/or methods based on the description herein.

In this disclosure, when an element is referred to herein as being "connected" or "coupled" to another element, it is to be understood that one element can be directly connected to the other element or have intervening elements present between the elements. In contrast, when an element is referred to as being "directly connected" or "directly coupled" to another element, it should be understood that no intervening elements are present in the "direct" connection between the elements. However, the existence of a direct connection does not preclude other connections, in which intervening elements may be present. Similarly, while the methods and processes described herein may be described in a particular order for ease of description, it should be understood that, unless the context dictates otherwise, intervening processes may take place before and/or after any portion of the described process, and, as noted above, described procedures may be reordered, added, and/or omitted in accordance with various embodiments.

In this application, the use of the singular includes the plural unless specifically stated otherwise, and use of the term "and" means "and/or" unless otherwise indicated. Also, as used herein, the term "or" is intended to be inclusive when used in a series and also may be used interchangeably with "and/or," unless explicitly stated otherwise (e.g., if used in combination with "either" or "only one of"). Moreover, the use of the term "including," as well as other forms, such as "includes" and "included," should be considered non-exclusive. Also, terms such as "element" or "component" encompass both elements and components comprising one unit and elements and components that comprise more than one unit, unless specifically stated otherwise. As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C," or alternatively, "at least one of A, at least one of B, and at least one of C," it is expressly described as such.

Unless otherwise indicated, all numbers used herein to express quantities, dimensions, and so forth should be understood as being modified in all instances by the term "about." As used herein, the articles "a" and "an" are intended to include one or more items and may be used interchangeably with "one or more." Similarly, as used herein, the article "the" is intended to include one or more items referenced in connection with the article "the" and may be used interchangeably with "the one or more." As used herein, the term "set" is intended to include one or more items (e.g., related items, unrelated items, a combination of related and unrelated items, and/or the like), and may be used interchangeably with "one or more." Where only one item is intended, the phrase "only one" or similar language is used. As used herein, the terms "has," "have," "having," or the like are intended to be open-ended terms. Further, the phrase "based on" is intended to mean "based, at least in part, on" unless explicitly stated otherwise. In the foregoing description, satisfying a threshold may, depending on the context, refer to a value being greater than the threshold, greater than or equal to the threshold, less than the threshold, less than or equal to the threshold, equal to the threshold, and/or the like, depending on the context.

Although particular combinations of features are recited in the claims and/or disclosed in the specification, these combinations are not intended to limit the disclosure of various implementations. In fact, many of these features may be combined in ways not specifically recited in the claims and/or disclosed in the specification. Thus, while each dependent claim listed below may directly depend on only one claim, the disclosure of various implementations includes each dependent claim in combination with every other claim in the claim set. No element, act, or instruction used herein should be construed as critical or essential unless explicitly described as such.

## Claims

1. A network aware memory agent (100), comprising:
a memory interface (125) configured to communicate with a first system memory (140a) comprising random access memory, RAM;
at least one communication interface configured to communicate with:
a first central processing unit, CPU(205a); and
packet network equipment (150);
logic to identify a first memory window comprising the first system memory (140a);
logic to communicate with a local CPU via an interconnect;
logic to receive a first memory request;
logic to determine that the first memory request addresses a second memory window not comprising the first system memory (140a);
logic to identify, based on a memory window identifier in the first memory request, a target memory agent associated with the second memory window;
logic to generate a first enhanced memory request, EMR, agent-to-agent request, a2aReq, message corresponding to the first memory request;
logic to identify packet header information associated with the target memory agent; and
logic to packetize the first EMR a2aReq message using the packet header information to produce one or more data packets; and
logic to transmit the one or more data packets for reception by the target memory agent via the packet network equipment (150).

2. The network aware memory agent (100) of claim 1, wherein:
the first memory request is received as a message passing interface, MPI, message from the local CPU over the interconnect; and
the network aware memory agent (100) further comprises:
logic to generate the first EMR a2aReq message from the MPI message.

3. The network aware memory agent (100) of claim 2, further comprising:
logic to receive an in-network compute request;
logic to execute an in-network compute function in response to receiving the in-network compute request; and
logic to transmit a response to the in-network compute request.

4. The network aware memory agent (100) of claim 3, wherein:
the in-network compute request comprises an accumulate request comprising a first set of data; and
the logic to execute an in-network compute function comprises:
logic to perform an operation with the first set of data.

5. The network aware memory agent (100) of any of claims 2 to 4, further comprising:
logic to receive a packetized response message from the target memory agent over the packet network via the packet network equipment (150);
logic to generate an MPI response message based at least in part on the packetized response message; and
logic to transmit the MPI response message over the interconnect for reception by the local CPU.

6. The network aware memory agent (100) of any of claims 1 to 5, wherein the at least one communication interface is a plurality of separate interfaces, the plurality of separate interfaces comprising:
an interconnect interface providing communication with the local CPU; and
a network interface providing communication with the packet network equipment (150).

7. The network aware memory agent (100) of claim 6, wherein the interconnect comprises a front-side bus of the local CPU.

8. The network aware memory agent (100) of any of claims 1 to 7, wherein:
the network aware memory agent (100) further comprises:
logic to receive a second memory request addressed to the first memory window, the second memory request comprising a fence message from a request origin;
logic to set a fence flag for the first memory window;
logic to receive a plurality of subsequent memory requests from the request origin directed to the first memory window;
logic to increment a counter upon receipt of each of the plurality of subsequent memory requests;
logic to execute each of the plurality of subsequent memory requests directed to the first memory request;
logic to decrement the counter upon execution of each of the plurality of subsequent memory requests; and
logic to clear the fence flag upon determining that the counter has been decremented to zero; and
logic to transmit a completion response message, CRM, upon determining that the counter has been decremented to zero.

9. The network aware memory agent (100) of any of claims 1 to 8, further comprising:
logic to receive a second memory request addressed to a second memory window;
logic to identify a target memory agent associated with the second memory window;
logic to determine a communication route for the target memory agent;
logic to generate a second a2aReq message encapsulating the second memory request;
logic to transmit the second a2aReq message via the interconnect if the communication route indicates communications for the target memory agent are routed via the interconnect; and
logic to transmit the second a2aReq message as one or more packets via the packet network if the communication route indicates communications for the target memory agent are routed via the packet network.

10. The network aware memory agent (100) of any of claims 1 to 9, further comprising:
logic to receive a second memory request from a peer memory agent via the at least one communication interface;
logic to determine that the second memory request addresses the first memory window;
logic to execute the second memory request on the first system memory (140a), based on a determination that the second memory request addresses the first memory window; and
logic to transmit a response for reception by the peer memory agent.

11. The network aware memory agent (100) of claim 10, wherein:
the second memory request comprises one or more request Internet protocol, IP, packets received over the packet network via the packet network equipment (150); and
the one or more response packets comprises one or more response IP packets;
in particular further comprising:
logic to receive explicit congestion notification, ECN, information; and
logic to determine a timing of transmission of the one or more response IP packets to reduce risk of communication loss, based at least in part on the ECN information.

12. The network aware memory agent (100) of claim 10 or 11, comprising at least one of the following features:
(i) wherein:
the second memory request comprises a compute express link, CXL, message received over the interconnect;
(ii) wherein:
the memory interface (125) is coupled with a memory controller, and
the logic to execute the first memory request comprises:
logic to communicate the first memory request to the memory controller;
(iii) wherein:
the network aware memory agent (100) further includes a memory controller;
the memory controller is coupled with the first system memory (140a); and
the logic to execute the first memory request on the first system memory (140a) comprises logic to cause the included memory controller to execute the first memory request on the first system memory (140a);
(iv) wherein:
the second memory request comprises a write command; and
the response comprises a completion message indicating data was written to the first system memory (140a);
(v) wherein:
the second memory request comprises a read command; and
the response comprises data read from the first system memory (140a).

13. The network aware memory agent (100) of any of claims 1 to 12, further comprising:
logic to maintain at least one request queue;
logic to store a plurality of received requests in the at least one queue;
logic to maintain an origin context associating each message in the queue with an origin of that message;
logic to maintain a window context associating each message in the queue with a memory window to which that request is directed; and
logic to process the plurality of received requests in the queue according to the origin context and the window context.

14. A network aware memory controller, comprising:
a memory controller, the memory controller comprising:
a memory interface (125) configured to communicate with a first system memory (140a) comprising random access memory, RAM;
an interconnect interface configured to communicate with an interconnect providing communication with a first central processing unit, CPU(205a);
a packet network interface configured to communicate with a packet network; and
logic to transmit and receive memory requests via the packet network.

15. A method, comprising:
identifying, by a network aware memory agent (100), a first memory window comprising a first system memory (140a), the first system memory (140a) comprising random access memory, RAM, the network aware memory agent (100) comprising:
a memory interface (125) configured to communicate with a first system memory (140a) comprising random access memory, RAM;
at least one communication interface configured to communicate with:
a first central processing unit, CPU(205a); and
packet network equipment (150);
communicating, by the network aware memory agent (100), with a local CPU via the interconnect;
receiving, by the network aware memory agent (100), a first memory request;
determining, by the network aware memory agent (100), that the first memory request addresses a second memory window not comprising the first system memory (140a);
identifying, by the network aware memory agent (100) and based on a memory window identifier in the first memory request, a target memory agent associated with the second memory window;
generating, by the network aware memory agent (100), a first enhanced memory request, EMR, a2aReq message embedding the first memory request;
identifying, by the network aware memory agent (100), packet header information associated with the target memory agent;
packetizing, by the network aware memory agent (100), the a2aReq message using the packet header information to produce one or more data packets; and
transmitting, by the network aware memory agent (100), the one or more data packets for reception by the target memory agent via the packet network equipment (150).
